# EUROPEAN PATENT APPLICATION

(11) **EP 4 835 305 A1**
(43) Date of publication of application: **04.11.2026**
(21) Application number: 26744285.3
(22) Date of filing: 30.01.2026
(51) Int. Cl.: F04D 29/30, F04D 29/62

(54) **CENTRIFUGAL FAN AND REFRIGERATION DEVICE**

(30) Priority: 31.01.2025 JP 2025014942
(71) Applicant: DAIKIN INDUSTRIES, LTD., Osaka-shi, Osaka 530-0001 (JP)
(72) Inventor: MIFUNE, Yurie, Osaka-shi, Osaka 530-0001 (JP); KASHIHARA, Takashi, Osaka-shi, Osaka 530-0001 (JP); MATSUMOTO, Kazuhiro, Osaka-shi, Osaka 530-0001 (JP)
(74) Representative: Hoffmann Eitle
(86) International application number: PCT/JP2026/003435
(87) International publication number: WO 2026/164287

(57) **Abstract**

In an impeller (60) of a centrifugal fan (50), a base plate (61), a shroud (62), and a plurality of blades (63) are integrally molded from resin. Each blade (63) extends so as to curve from an inner peripheral side toward an outer peripheral side in a cross section perpendicular to an axis (Ac). A pitch of outer edges (63b) of adjacent blades (63) in a circumferential direction about the axis (Ac) differs on both sides of each blade (63) in the circumferential direction. In the pair of adjacent blades (63), the presence or absence of a flat surface (68), or the area of the flat surface (68), differs at first surfaces (63p) of respective inner end portions (63i) or at second surfaces (63s) of respective outer portions (63r).

## Description

### TECHNICAL FIELD

The present disclosure relates to a centrifugal fan and a refrigeration apparatus.

### BACKGROUND ART

A fan is used in a refrigeration apparatus such as an air conditioner. A centrifugal fan has been known as the fan. The centrifugal fan includes an impeller and a fan motor. The impeller has a base plate attached to the fan motor, a shroud separated from the base plate in an axial direction along an axis, and a plurality of blades provided between the base plate and the shroud. The plurality of blades are arranged at intervals in a circumferential direction about the axis of the centrifugal fan.

In the centrifugal fan, the impeller is rotated by driving the fan motor, and along with rotation of the impeller, air is sucked through a fan inlet opening formed at the center of the shroud and is blown from between the blades to the outer peripheral side. In the centrifugal fan, it is proposed that the base plate, the shroud, and the plurality of blades are made of resin so that the impeller is integrally molded by injection molding. An example of the centrifugal fan having such an impeller made of resin is disclosed in Patent Document 1.

### CITATION LIST

### PATENT DOCUMENT

Patent Document 1: Japanese Unexamined Patent Publication No. 2015-102003

### SUMMARY OF THE INVENTION

### TECHNICAL PROBLEM

In the centrifugal fan, all the blades of the impeller have the same shape in order to improve air-delivery performance. In addition, in the centrifugal fan, noise is generated as the impeller rotates. The noise includes blade-passing frequency noise, which is the wind noise generated by the airflow between the blades during rotation of the blades. The blade-passing frequency noise has a frequency represented by the product (N × Z) of the number of rotations (N) of the fan and the number of blades (Z), and is thus also called NZ noise. In the centrifugal fan, it is conceivable to dispose the plurality of blades at unequal pitches in order to reduce the NZ noise.

However, if the plurality of blades are disposed at unequal pitches in the integrally molded resin impeller described above, it is difficult to prevent interference between slide molds used to mold the blades, among molds of an injection molding apparatus, as well as interference between the slide molds and other mold components, during sliding in the withdrawal direction corresponding to a radially outward direction of the centrifugal fan. Molds with a complicated structure are therefore needed, which increases cost. For this reason, it is difficult to manufacture the impeller of the centrifugal fan as the integrally molded resin impeller.

An object of the present disclosure is to easily manufacture an integrally molded resin impeller of a centrifugal fan in which a plurality of blades are disposed at unequal pitches.

### SOLUTION TO THE PROBLEM

A first aspect of the present disclosure is directed to a centrifugal fan (50). The centrifugal fan (50) includes an impeller (60) configured to rotate about a predetermined axis (Ac). The impeller (60) has a base plate (61) configured to rotate about the predetermined axis (Ac), an annular shroud (62) spaced apart from the base plate (61) in an axial direction along the axis (Ac), and a plurality of blades (63) spaced apart from each other in a circumferential direction about the axis (Ac) between the base plate (61) and the shroud (62). The base plate (61), the shroud (62), and the plurality of blades (63) are integrally molded from resin. Each of the plurality of blades (63) has a cross-sectional shape extending so as to curve from an inner peripheral side toward an outer peripheral side in a cross section perpendicular to the axis (Ac). Each of the plurality of blades (63) also has an inner edge (63a) which is an edge of the blade (63) on the inner peripheral side, an outer edge (63b) which is an edge of the blade (63) on the outer peripheral side, a first surface (63p) facing an outside of the curve of the blade (63) between the inner edge (63a) and the outer edge (63b), and a second surface (63s) facing an inside of the curve of the blade (63) between the inner edge (63a) and the outer edge (63b). A pitch of the outer edges (63b) of a pair of adjacent blades (63) in the circumferential direction differs on both sides of each blade (63) in the circumferential direction. The presence or absence of a flat surface (68), or an area of the flat surface (68), differs between the pair of adjacent blades (63) at the first surfaces (63p) of inner end portions (63i) closer to the respective inner edges (63a) or at the second surfaces (63s) of outer portions (63r) closer to the respective outer edges (63b), the flat surface (68) extending in a direction intersecting a straight line connecting the outer edge (63b) of one of the pair of blades (63) positioned forward in a direction of rotation of the impeller (60) and the inner edge (63a) of the blade (63) positioned rearward in the direction of rotation of the impeller (60).

According to the first aspect, the pitch of the outer edges (63b) of adjacent blades (63) in the circumferential direction differs on both sides of each blade (63) in the circumferential direction. When the plurality of blades (63) are disposed at unequal pitches in this manner, the NZ noise due to rotation of the impeller (60) is reduced. In the pair of adjacent blades (63), the presence or absence of a flat surface (68), or the area of the flat surface (68), differs at first surfaces (63p) of respective inner end portions (63i) or at second surfaces (63s) of respective outer portions (63r). The first surface (63p) of the inner end portion (63i) and the second surface (63s) of the outer portion (63r) of each blade (63) form portions closest to other blades (63) adjacent in the direction of rotation of the impeller (60). Thus, the withdrawal direction (d2) of the slide mold (240) is restricted by the shapes of the first surfaces (63p) of the respective inner end portions (63i) and the shapes of the second surfaces (63s) of the respective outer portions (63r) of the pair of blades (63) adjacent to each other. The flat surface (68) formed at the shape of the first surface (63p) of the inner end portion (63i) or at the second surface (63s) of the outer portion (63r) forms a surface extending in the sliding direction of the slide mold (240) in the injection molding apparatus (200). Thus, when the presence or absence of the flat surfaces (68), or the areas of the flat surfaces (68), differ at the first surfaces (63p) of the respective inner end portions (63i) or at the second surfaces (63s) of the respective outer portions (63r) in the pair of adjacent blades (63), the angles formed by the withdrawal directions (d2) of the adjacent slide molds (240) with respect to the direction corresponding to the radial direction of the impeller (60) can be made different from each other. This makes it possible to adjust the withdrawal directions (d2) of the plurality of slide molds (240) for molding the blades (63) such that the slide molds (240) do not interfere with each other or with other portions of the mold (205) in the mold (205) of the injection molding apparatus (200). Thus, the integrally molded resin impeller (60) in which the plurality of blades (63) are disposed at unequal pitches can be easily manufactured.

A second aspect of the present disclosure is an embodiment of the centrifugal fan (50) of the first aspect. In the second aspect, the plurality of blades (63) include a first blade (63A), a second blade (63B) adjacent to the first blade (63A), and a third blade (63C) adjacent to the first blade (63A) on a side opposite to the second blade (63B). The second blade (63B) is positioned rearward of the first blade (63A) in the direction of rotation. The third blade (63C) is positioned forward of the first blade (63A) in the direction of rotation. The pitch between the first blade (63A) and the third blade (63C) is shorter than the pitch between the first blade (63A) and the second blade (63B). The first blade (63A) and the third blade (63C) have the flat surfaces (68) at portions corresponding to each other at the second surfaces (63s) of the outer portions (63r). An area of the flat surface (68) at the second surface (63s) of the outer portion (63r) of the third blade (63C) is larger than an area of the flat surface (68) at the second surface (63s) of the outer portion (63r) of the first blade (63A).

According to the second aspect, the pitch between the first blade (63A) and the third blade (63C) is shorter than the pitch between the first blade (63A) and the second blade (63B), and the area of the flat surface (68) at the second surface (63s) of the outer portion (63r) of the third blade (63C) is larger than the area of the flat surface (68) at the second surface (63s) of the outer portion (63r) of the first blade (63A). The shorter the pitch of adjacent blades (63), the stricter the restriction on the withdrawal direction (d2) of the corresponding slide mold (240) between the adjacent blades (63). To address this, in the pair of adjacent blades (63), the area of the flat surface (68) at the second surface (63s) of the outer portion (63r) of the blade (63) positioned forward in the direction of rotation is increased as the pitch of the pair of adjacent blades (63) decreases, thereby relaxing the restriction on the withdrawal direction (d2) of the slide mold (240). Thus, the withdrawal direction (d2) of the corresponding slide mold (240) between the first blade (63A) and the second blade (63B) and the withdrawal direction (d2) of the corresponding slide mold (240) between the first blade (63A) and the third blade (63C) can be adjusted such that both of these slide molds (240) do not interfere with each other.

A third aspect of the present disclosure is an embodiment of the centrifugal fan (50) of the first or second aspect. In the third aspect, the plurality of blades (63) include a first blade (63A), a second blade (63B) adjacent to the first blade (63A), and a third blade (63C) adjacent to the first blade (63A) on a side opposite to the second blade (63B). The second blade (63B) is positioned rearward of the first blade (63A) in the direction of rotation. The third blade (63C) is positioned forward of the first blade (63A) in the direction of rotation. The pitch between the first blade (63A) and the third blade (63C) is shorter than the pitch between the first blade (63A) and the second blade (63B). The first blade (63A) and the second blade (63B) have the flat surfaces (68) at portions corresponding to each other at the first surfaces (63p) of the inner end portions (63i). An area of the flat surface (68) at the first surface (63p) of the inner end portion (63i) of the first blade (63A) is larger than an area of the flat surface (68) at the first surface (63p) of the inner end portion (63i) of the second blade (63B).

According to the third aspect, the pitch between the first blade (63A) and the third blade (63C) is shorter than the pitch between the first blade (63A) and the second blade (63B), and the area of the flat surface (68) at the first surface (63p) of the inner end portion (63i) of the first blade (63A) is larger than the area of the flat surface (68) at the first surface (63p) of the inner end portion (63i) of the second blade (63C). The shorter the pitch of adjacent blades (63), the stricter the restriction on the withdrawal direction (d2) of the corresponding slide mold (240) between the adjacent blades (63). To address this, in the pair of adjacent blades (63), the area of the flat surface (68) at the first surface (63p) of the inner end portion (63i) of the blade (63) positioned forward in the direction of rotation is increased as the pitch of the pair of adjacent blades (63) decreases, thereby relaxing the restriction on the withdrawal direction (d2) of the slide mold (240). Thus, the withdrawal direction (d2) of the corresponding slide mold (240) between the first blade (63A) and the second blade (63B) and the withdrawal direction (d2) of the corresponding slide mold (240) between the first blade (63A) and the third blade (63C) can be adjusted such that both of these slide molds (240) do not interfere with each other.

A fourth aspect of the present disclosure is an embodiment of the centrifugal fan (50) of any one of the first to third aspects. In the fourth aspect, the flat surface (68) is provided at the first surface (63p) of the inner end portion (63i) of the blade (63). The plurality of blades (63) include a first blade (63A) and a second blade (63B) adjacent to each other. In a cross section perpendicular to the axis (Ac), of the impeller (60), a line segment connecting the inner edge (63a) and the outer edge (63b) of the blade (63) is a chord line (Lc). A thickness of the inner end portion (63i) of the first blade (63A) in a direction orthogonal to the chord line (Lc) and a thickness of the inner end portion (63i) of the second blade (63B) in the direction orthogonal to the chord line (Lc) differ at portions corresponding to each other according to the presence or absence of the flat surface (68) or according to the area of the flat surface (68).

According to the fourth aspect, the flat surface (68) is provided at the first surface (63p) of the inner end portion (63i) of the blade (63). The blade (63) has a cross-sectional shape extending so as to curve from the inner peripheral side toward the outer peripheral side in a cross section perpendicular to the axis (Ac). Thus, in the mold (205) of the injection molding apparatus (200), the withdrawal direction (d2) of the slide mold (240) for molding the blade (63) is restricted to a predetermined range due to the shape of the inner end portion (63i) of the blade (63). To address this, the thickness of the inner end portion (63i) of the first blade (63A) and the thickness of the inner end portion (63i) of the second blade (63B) differ at portions corresponding to each other according to the presence or absence of the flat surface (68) or according to the area of the flat surface (68). The range of restriction on the withdrawal direction (d2) of the slide mold (240) can be changed by varying the thickness of the inner end portion (63i) of the blade (63). Thus, the withdrawal direction (d2) of the slide mold (240) for forming the first surface (63p) of the first blade (63A) and the withdrawal direction (d2) of the slide mold (240) for forming the first surface (63p) of the second blade (63B) can be adjusted such that these slide molds (240) do not interfere with each other.

A fifth aspect of the present disclosure is an embodiment of the centrifugal fan (50) of the fourth aspect. In the fifth aspect, the plurality of blades (63) include a third blade (63C) adjacent to the first blade (63A) on a side opposite to the second blade (63B). The second blade (63B) is positioned rearward of the first blade (63A) in the direction of rotation. The third blade (63C) is positioned forward of the first blade (63A) in the direction of rotation. The pitch between the first blade (63A) and the third blade (63C) is shorter than the pitch between the first blade (63A) and the second blade (63B). The thickness of the inner end portion (63i) of the first blade (63A) in the direction orthogonal to the chord line (Lc) is thinner than the thickness of the inner end portion (63i) of the second blade (63B) in the direction orthogonal to the chord line (Lc).

According to the fifth aspect, the pitch between the first blade (63A) and the third blade (63C) is shorter than the pitch between the first blade (63A) and the second blade (63B), and the thickness of the inner end portion (63i) of the first blade (63A) is thinner than the thickness of the inner end portion (63i) of the second blade (63B). The shorter the pitch of adjacent blades (63), the stricter the restriction on the withdrawal direction (d2) of the corresponding slide mold (240) between the adjacent blades (63). To address this, in adjacent blades (63), the thickness of the inner end portion (63i) of the blade (63) positioned rearward in the direction of rotation is reduced as the pitch of the adjacent blades (63) decreases, thereby relaxing the restriction on the withdrawal direction (d2) of the slide mold (240). Thus, the withdrawal direction (d2) of the corresponding slide mold (240) between the first blade (63A) and the second blade (63B) and the withdrawal direction (d2) of the corresponding slide mold (240) between the first blade (63A) and the third blade (63C) can be adjusted such that both of these slide molds (240) do not interfere with each other.

A sixth aspect of the present disclosure is an embodiment of the centrifugal fan (50) of any one of the first to fifth aspects. In the sixth aspect, the second surface (63s) forms a suction surface that receives a negative pressure during rotation of the impeller (60). The flat surface (68) is provided at the second surface (63s) of the outer portion (63r) of the blade (63).

According to the sixth aspect, the flat surface (68) is provided at the second surface (63s) of the outer portion (63r) of the blade (63). The second surface (63s) forms a suction surface of the blade (63). The shape of the suction surface of the blade (63) does not affect the air-delivery performance as greatly as the shape of the pressure surface. Thus, the integrally molded resin impeller (60) in which the plurality of blades (63) are disposed at unequal pitches can be easily manufactured while suppressing degradation of the air-delivery performance of the centrifugal fan (50).

A seventh aspect of the present disclosure is an embodiment of the centrifugal fan (50) of any one of the first to sixth aspects. In the seventh aspect, the first surface (63p) forms a pressure surface that receives a positive pressure during rotation of the impeller (60). The plurality of blades (63) are identical to each other in shape in 90% or more of the respective first surfaces (63p).

According to the seventh aspect, the plurality of blades (63) are identical to each other in shape in 90% or more of the respective first surfaces (63p). The first surface (63p) forms the pressure surface of the blade (63). According to this configuration, the plurality of blades (63) are different from each other in shape in less than 10% of the respective first surfaces (63p), thereby making it possible to adjust the withdrawal directions (d2) of the plurality of slide molds

(240) for molding the blades (63) such that the slide molds (240) do not interfere with each other or with other portions of the mold (205) in the mold (205) of the injection molding apparatus (200). Since the plurality of blades (63) are identical to each other in shape in 90% or more of the respective first surfaces (63p), it is possible to suppress degradation of the air-delivery performance of the centrifugal fan (50).

An eighth aspect of the present disclosure is an embodiment of the centrifugal fan (50) of any one of the first to seventh aspects. In the eighth aspect, the outer edge (63b) of the blade (63) is inclined with respect to the axis (Ac) so as to extend in a direction corresponding to a radially outward direction of the impeller (60) from the base plate (61) toward the shroud (62).

According to the eighth aspect, the outer edge (63b) of each blade (63) is inclined with respect to the axis (Ac), and extends in the direction corresponding to the radially outward direction of the impeller (60) while extending from the base plate (61) toward the shroud (62), thereby forming the skew angle. In the mold (205) for molding the impeller (60) having the blades (63) with such skew angles, restriction on the withdrawal direction (d2) of the slide mold (240) is strict, because the first surface (63p) and the second surface (63s) formed by the slide mold (240) are long in the sliding direction, and the removal distance of the slide mold (240) from the impeller (60) in opening the mold (205) is long. Thus, the technique of the present disclosure is particularly effective in the method of manufacturing such an impeller (60).

A ninth aspect of the present disclosure is an embodiment of the centrifugal fan (50) of any one of the first to eighth aspects. In the ninth aspect, the number of blades (63) is six or more.

According to the ninth aspect, the number of blades (63) is six or more. If the number of blades (63) is five or less, the workload per blade (63) becomes relatively large, which increases abnormal noise during air blowing. In addition, there is also a concern that the static pressure characteristics of the impeller (60) are degraded. When the static pressure characteristics of the impeller (60) are degraded, the number of rotations required for a required volume of air increases, and thus, the shaft power increases. In contrast, when the number of blades (63) is six or more, the static pressure characteristics of the impeller (60) can be maintained, thereby reducing the shaft power, while suitably reducing noise associated with the rotational operation of the impeller (60). In particular, the six blades (63) are suitable for ensuring the performance of the impeller (60) and establishing the molding method of this example.

A tenth aspect of the present disclosure is directed to a refrigeration apparatus (1). The refrigeration apparatus (1) includes the centrifugal fan (50) of any one of the first to ninth aspects.

According to the tenth aspect, the refrigeration apparatus (1) includes the centrifugal fan (50). Since the impeller (60) of the centrifugal fan (50) is integrally molded from resin, the impeller (60) is suitable for mass production because a step of assembling components can be omitted, as compared to a centrifugal fan using an assembly-type impeller formed by integrating a base plate (61), a shroud (62), and a plurality of blades (63), which are separate components. Further, the weight of the centrifugal fan (50) can be reduced and the centrifugal fan (50) is less likely to vibrate during rotation, as compared to a case in which at least one of the base plate (61), the shroud (62), or the plurality of blades (63) is formed of a metal component. This contributes to improving the energy efficiency of the refrigeration apparatus (1).

### BRIEF DESCRIPTION OF THE DRAWINGS

[FIG. 1] FIG. 1 is a refrigerant circuit diagram illustrating, as an example, the configuration of an air conditioner.
[FIG. 2] FIG. 2 is a perspective view illustrating the appearance of an indoor unit.
[FIG. 3] FIG. 3 is a view of the inside of the indoor unit when viewed from the front.
[FIG. 4] FIG. 4 is a view of the inside of the indoor unit when viewed from the left.
[FIG. 5] FIG. 5 is a perspective view illustrating, as an example, the configuration of an indoor fan.
[FIG. 6] FIG. 6 is a cross-sectional view of a first centrifugal fan taken along line VI-VI in FIG. 5.
[FIG. 7] FIG. 7 is an exploded perspective view illustrating, as an example, the configuration of a main part of the first centrifugal fan.
[FIG. 8] FIG. 8 is a perspective view illustrating, as an example, the configuration of an impeller.
[FIG. 9] FIG. 9 is a plan view illustrating, as an example, the configuration of the impeller.
[FIG. 10] FIG. 10 is a plan view illustrating, as an example, the configuration of the impeller, shown through a shroud.
[FIG. 11] FIG. 11 is a side view illustrating, as an example, the configuration of the impeller.
[FIG. 12] FIG. 12 is a side view illustrating, as an example, the configuration of the impeller taken along line XII-XII in FIG. 11.
[FIG. 13] FIG. 13 is a cross-sectional view of a molding apparatus including a mold used to mold the impeller.
[FIG. 14] FIG. 14 is a plan view illustrating, as an example, a main part of a closed mold, shown through a stationary mold. In FIG. 14, for convenience, the edge of a cavity for base plate molding is indicated by a two-dot-dash line.
[FIG. 15] FIG. 15 is an enlarged plan view of a main part of the mold.
[FIG. 16] FIG. 16 is a cross-sectional view illustrating a state in which the mold is closed in the course of manufacturing the impeller and a state in which a cavity in the mold is filled with resin.
[FIG. 17] FIG. 17 is a plan view corresponding to FIG. 14, which illustrates a state in which the impeller is molded in the mold. In FIG. 17, for convenience, the edge of the base plate is indicated by a two-dot-dash line.

### DESCRIPTION OF EMBODIMENTS

Embodiments of the present disclosure will be described in detail below with reference to the drawings. In the following embodiments, a case in which a centrifugal fan according to the present disclosure is applied to an indoor unit of an air conditioner will be described as an example. The drawings are used for conceptual description of the technique of the present disclosure. In the drawings, dimensions, ratios, or numbers may be exaggerated or simplified for easy understanding of the present disclosure.

In the following embodiment, a direction along the axis of the centrifugal fan will be referred to as an "axial direction," and a direction perpendicular to the axial direction as a "radial direction." Further, a direction along the circumference of the centrifugal fan about its axis will be referred to as a "circumferential direction." The expressions of "first," "second," . . . are used to distinguish the terms to which these expressions are given, and do not limit the number and order of the terms.

### <<Embodiments>>

In this embodiment, a case in which a centrifugal fan (50) according to the present disclosure is used in a floor-mounted indoor unit (3) will be described as an example. The indoor unit (3) is used for a refrigeration apparatus. The refrigeration apparatus of this embodiment is an air conditioner (1). The air conditioner (1) is a so-called an air conditioner for facilities, which is an apparatus that conditions air in a wide indoor space such as a computer room where a plurality of computers such as servers are disposed, a factory, and a warehouse.

### (1) General Configuration of Air Conditioner

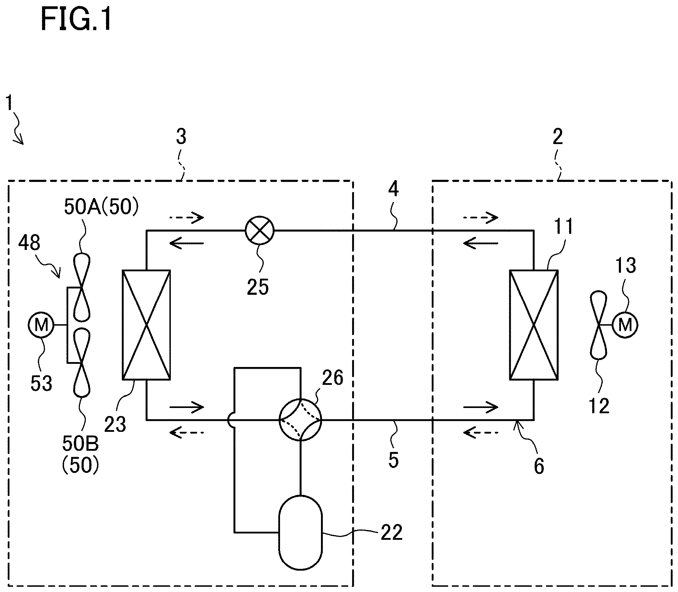

As illustrated in FIG. 1, the air conditioner (1) is a paired type air conditioner, and includes an outdoor unit (2) and an indoor unit (3). The outdoor unit (2) is placed outdoors. The indoor unit (3) is placed indoors. The outdoor unit (2) and the indoor unit (3) are connected to each other by a liquid connection pipe (4) and a gas connection pipe (5). This connection forms a refrigerant circuit (6).

The refrigerant circuit (6) is filled with refrigerant. The refrigerant circuit (6) includes, as main components, a compressor (22), an outdoor heat exchanger (11), an expansion valve (25), a four-way switching valve (26), and an indoor heat exchanger (23). The compressor (22), the outdoor heat exchanger (11), the expansion valve (25), the four-way switching valve (26), and the indoor heat exchanger (23) are connected by pipes. The refrigerant circuit (6) circulates the refrigerant to perform a refrigeration cycle.

The compressor (22), the indoor heat exchanger (23), the expansion valve (25), and the four-way switching valve (26) are included in the indoor unit (3). The compressor (22) sucks and compresses low-pressure gas refrigerant and discharges the compressed refrigerant. The refrigerant filling the refrigerant circuit (6) is circulated by operation of the compressor (22). The expansion valve (25) decompresses the refrigerant. The four-way switching valve (26) switches the direction of circulation of the refrigerant in the refrigerant circuit (6).

The four-way switching valve (26) is in a first state (state indicated by a solid line in FIG. 1) during a cooling operation. When the four-way switching valve (26) is in the first state, the refrigerant flows through the refrigerant circuit (6) in a direction indicated by solid arrows. The four-way switching valve (26) is in a second state (state indicated by a broken line in FIG. 1) during a heating operation. When the four-way switching valve (26) is in the second state, the refrigerant flows through the refrigerant circuit (6) in a direction indicated by broken arrows.

The indoor unit (3) further includes an indoor fan (48). The indoor fan (48) is rotated by driving a first fan motor (53) and transfers indoor air through the indoor heat exchanger (23). The indoor fan (48) of this embodiment is configured to include two centrifugal fans (50). The indoor heat exchanger (23) exchanges heat between the air transferred by the indoor fan (48) and the refrigerant flowing inside.

The outdoor heat exchanger (11) is included in the outdoor unit (2). The outdoor unit (2) further includes an outdoor fan (12). The outdoor fan (12) is rotated by driving a second fan motor (13), and transfers outdoor air through the outdoor heat exchanger (11). The outdoor heat exchanger (11) exchanges heat between the air transferred by the outdoor fan (12) and the refrigerant flowing inside.

The air conditioner (1) conditions air in an indoor space (IS), which is a target space. The air conditioner (1) performs a cooling operation and a heating operation.

The cooling operation is an operation of cooling air in the indoor space (IS). In the cooling operation, the four-way switching valve (26) is set to the first state, and the outdoor fan (12), the compressor (22), and the indoor fan (48) are operated, so that the outdoor heat exchanger (11) functions as a radiator and the indoor heat exchanger (23) functions as an evaporator. The air transferred by the indoor fan (48) is cooled by the indoor heat exchanger (23) and supplied to the indoor space (IS).

The heating operation is an operation of heating air in the indoor space (IS). In the heating operation, the four-way switching valve (26) is set to the second state, and the outdoor fan (12), the compressor (22), and the indoor fan (48) are operated, so that the outdoor heat exchanger (11) functions as an evaporator and the indoor heat exchanger (23) functions as a radiator. The air transferred by the indoor fan (48) is heated by the indoor heat exchanger (23) and supplied to the indoor space (IS).

### (2) Indoor Unit

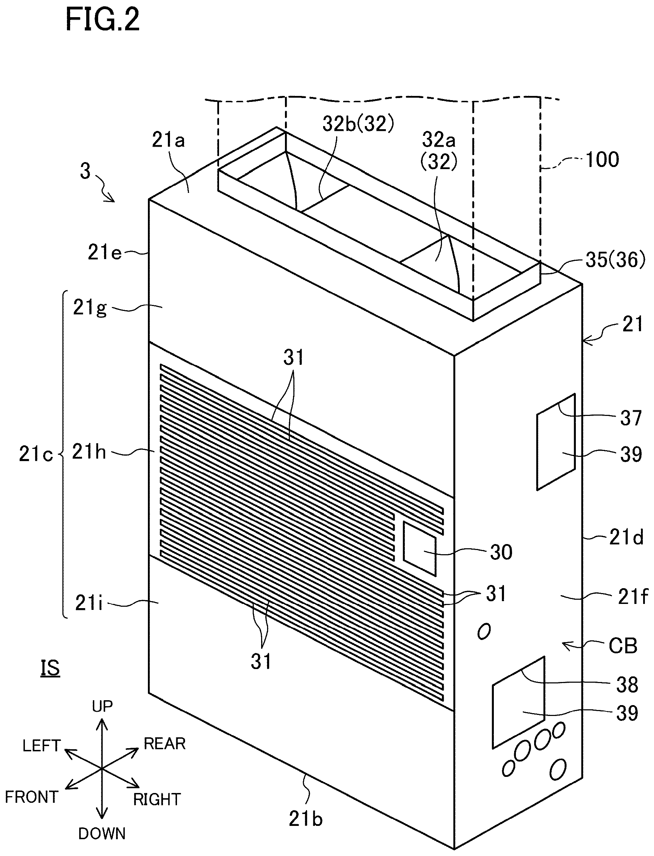

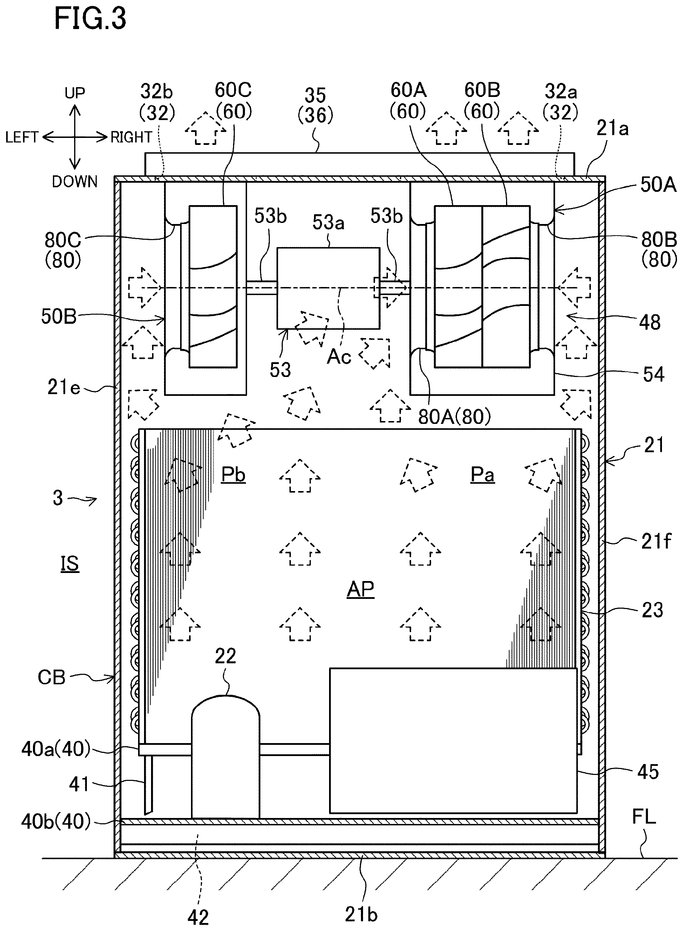

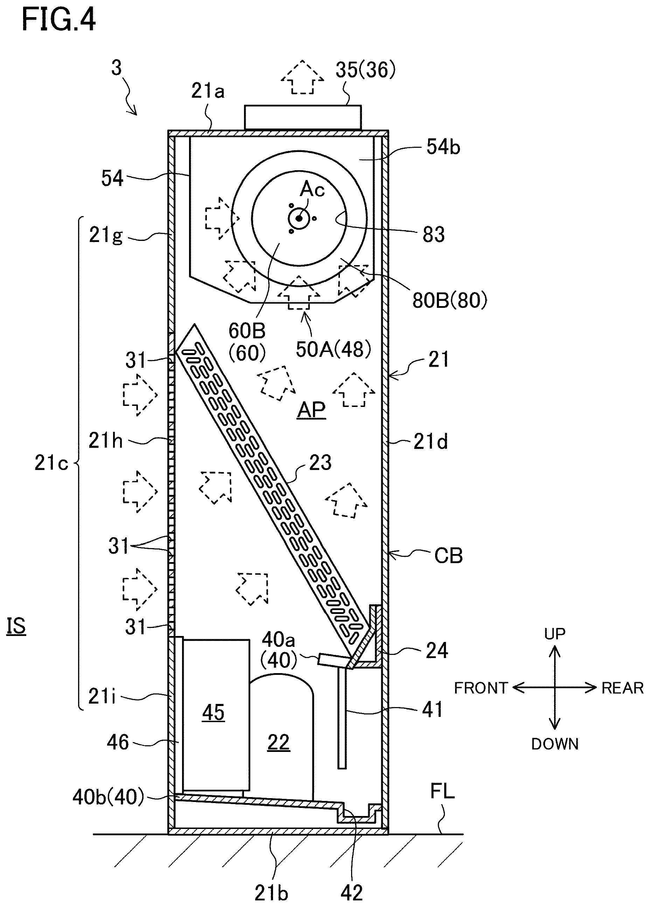

The indoor unit (3) will be described with reference to FIGS. 2 to 4. In the following description, the terms indicating "up," "down," "front," "rear," "left," and "right" are used with reference to the directions of arrows illustrated in FIGS. 2 to 4. In FIGS. 3 and 4, the flow of air in the indoor unit (3) is indicated by hollow dashed arrows.

The indoor unit (3) is a floor-mounted indoor unit and is placed on the floor surface (FL) of the indoor space (IS). The indoor unit (3) includes a casing (21), the indoor heat exchanger (23), a drain pan (40), an electric component box (45), the compressor (22), the expansion valve (25), the four-way switching valve (26), and the indoor fan (48). In FIGS. 3 and 4, the expansion valve (25) and the four-way switching valve (26) are not illustrated.

### (2-1) Casing

The casing (21) is formed in a substantially rectangular parallelepiped box shape. The casing (21) houses the indoor heat exchanger (23), the drain pan (40), the electric component box (45), the compressor (22), and the indoor fan (48). The casing (21) is placed on the floor surface (FL) and fixed to the floor by a fastening member via a metal fitting (not illustrated). The casing (21) is formed by combining metal or resin plate members. The casing (21) has a top panel (21a), a bottom plate (21b), a front panel (21c), a rear panel (21d), a left-side panel (21e), and a right-side panel (21f).

The top panel (21a) and the bottom plate (21b), the front panel (21c) and the rear panel (21d), and the left-side panel (21e) and the right-side panel (21f) face each other. The top panel (21a) forms the upper surface of the casing (21). The bottom plate (21b) forms the lower surface of the casing (21). The front panel (21c) forms the front surface of the casing (21). The rear panel (21d) forms the rear surface of the casing (21). The left-side panel (21e) forms the left surface of the casing (21). The right-side panel (21f) forms the right surface of the casing (21).

The front panel (21c) is divided into three in the up-down direction. The front panel (21c) is formed by an upper-side panel (21g), an intermediate panel (21h), and a lower-side panel (21i). The upper-side panel (21g), the intermediate panel (21h), and the lower-side panel (21i) are disposed in this order from the upper side to the lower side of the front panel (21c), and are attachable to and detachable from a casing body (CB). The casing body (CB) is a portion of the casing (21) excluding the front panel (21c). The intermediate panel (21h) is provided with an operation panel (30) for performing an operation related to the operation of the air conditioner (1).

The casing (21) has an inlet opening (31) and an outlet opening (32). The inlet opening (31) is an opening for sucking air in the indoor space (IS) into the casing (21). A plurality of inlet openings (31) are provided in the intermediate panel (21h) of the front panel (21c) while avoiding the operation panel (30). Each inlet opening (31) is formed as a slit extending in the left-right direction, for example. The plurality of inlet openings (31) are arranged in parallel at intervals in the up-down direction.

The outlet opening (32) is an opening for discharging the air that has exchanged heat in the casing (21) into the indoor space (IS). Two outlet openings (32) are provided in the top panel (21a). The two outlet openings (32) are a first outlet opening (32a) and a second outlet opening (32b). The first outlet opening (32a) and the second outlet opening (32b) are open at intervals in the left-right direction. Each of the first outlet opening (32a) and the second outlet opening (32b) is formed of, for example, a rectangular opening.

A frame-shaped portion (35) is provided on the upper surface of the top panel (21a). The frame-shaped portion (35) surrounds the two outlet openings (32) and forms a connecting port (36) protruding upward from the top panel (21a). The frame-shaped portion (35) is formed by combining a plurality of metal fittings such as long L-shaped angle bars. A duct (100) for transferring the air discharged from each of the outlet openings (32) to various locations in the indoor space (IS) is connected to the connecting port (36) formed by the frame-shaped portion (35).

A first opening (37) and a second opening (38) are formed in each of the left-side panel (21e) and the right-side panel (21f). The first opening (37) is located in an upper portion of the casing (21), and is used for maintenance of the indoor fan (48). The second opening (38) is located in a lower portion of the casing (21), and is used for maintenance of the electric component box (45) and the compressor (22). The first opening (37) and the second opening (38) are normally covered with a cover (39), and are opened by removing the cover (39) at the time of maintenance.

An air flow path (AP) is formed inside the casing (21). The air flow path (AP) is a flow path extending from the plurality of inlet openings (31) to the first outlet opening (32a) and the second outlet opening (32b). The air flow path (AP) has a right flow path (Pa) and a left flow path (Pb). The right flow path (Pa) is a flow path through which air is sucked into a first centrifugal fan (50A) and reaches the first outlet opening (32a), and is located on the right side in the casing (21). The left flow path (Pb) is a flow path through which air is sucked into a second centrifugal fan (50B) and reaches the second outlet opening (32b), and is located on the left side in the casing (21).

### (2-2) Indoor Heat Exchanger

The indoor heat exchanger (23) is disposed in the air flow path (AP) in the casing (21). The indoor heat exchanger (23) is fixed to the casing (21) such that substantially all the air flowing through the air flow path (AP) passes through the indoor heat exchanger (23). The indoor heat exchanger (23) of this example is disposed so as to stand behind the intermediate panel (21h) in a forward-inclined orientation, with its upper portion tilted further forward. A lower portion of the indoor heat exchanger (23) is located at a rear portion in the casing (21) and is fixed to a bracket (24) attached to the rear panel (21d). The indoor heat exchanger (23) is a fin-and-tube air heat exchanger.

### (2-3) Drain Pan

The drain pan (40) includes a first drain pan (40a) and a second drain pan (40b).

The first drain pan (40a) is fixed to the bracket (24) together with the indoor heat exchanger (23), and is disposed below the lower portion of the indoor heat exchanger (23). The first drain pan (40a) receives water (condensation water) condensed on the surface of the indoor heat exchanger (23) and at the periphery thereof. A discharge pipe (41) is provided at an end portion of the first drain pan (40a) on one side in the left-right direction (at the left end portion in the example illustrated in FIG. 3). The discharge pipe (41) extends downward from the bottom of the first drain pan (40a) and causes water in the first drain pan (40a) to flow downward.

The second drain pan (40b) is disposed in a lower portion in the casing (21). The second drain pan (40b) faces substantially the entire surface of the bottom plate (21b) of the casing (21), and is disposed in a forward-upward inclined posture such that the front edge is positioned slightly higher than the rear edge. Although not illustrated, a drain groove (42) extending in the left-right direction is formed in a rear portion of the second drain pan (40b). The water received by the first drain pan (40a) and the second drain pan (40b) is collected in the drain groove (42) and discharged to the outside of a room or the like via a drain hose.

### (2-4) Electric Component Box

The electric component box (45) is disposed on the right side in a lower portion in the casing (21). The electric component box (45) is fixed to a stand member (46) attached to the casing (21) so as to be spaced above the second drain pan (40b). The electric component box (45) is a box in a substantially rectangular parallelepiped shape, and houses predetermined electric components. The electric components include a control board that controls devices such as the indoor fan (48) and the compressor (22) and receives signals from various sensors.

### (2-5) Compressor

The compressor (22) is provided on the second drain pan (40b) at a position not overlapping the electric component box (45) in front view. The compressor (22) is disposed on the left side in a lower portion in the casing (21). The compressor (22) is a variable capacity compressor. The compressor (22) is configured such that its rotational speed is variable under inverter control by the control board in the electric component box (45) and that the capacity of refrigerant to be compressed is changeable.

### (2-6) Indoor Fan

The two centrifugal fans (50) forming the indoor fan (48) are the first centrifugal fan (50A) and the second centrifugal fan (50B). The first centrifugal fan (50A) and the second centrifugal fan (50B) are both turbo fans, and are disposed in the upper half portion of the inside of the casing (21). In this embodiment, the first centrifugal fan (50A) and the second centrifugal fan (50B) are attached to the top panel (21a) of the casing (21) and located above the indoor heat exchanger (23), and are disposed downstream of the indoor heat exchanger (23) in the air flow.

The first centrifugal fan (50A) is disposed on the right side in an upper portion of the casing (21). The second centrifugal fan (50B) is disposed on the left side in an upper portion of the casing (21). The first fan motor (53) is disposed between the first centrifugal fan (50A) and the second centrifugal fan (50B). The first fan motor (53) is a double-shaft motor in which a drive shaft (53b) extends from a motor body (53a) toward both left and right sides. The first fan motor (53) is used by both the first centrifugal fan (50A) and the second centrifugal fan (50B).

The first centrifugal fan (50A) is coupled to the drive shaft (53b) of the first fan motor (53) extending rightward. The second centrifugal fan (50B) is coupled to the drive shaft (53b) of the first fan motor (53) extending leftward. Both the first centrifugal fan (50A) and the second centrifugal fan (50B) are rotated by driving the first fan motor (53). The axis of the drive shaft (53b) coincides with the axes (Ac) of the first centrifugal fan (50A) and the second centrifugal fan (50B). The axis (Ac) of each of the first centrifugal fan (50A) and the second centrifugal fan (50B) extends in the left-right direction. That is, the left-right direction of this embodiment corresponds to an axial direction along the axis (Ac).

### (2-6-1) First Centrifugal Fan

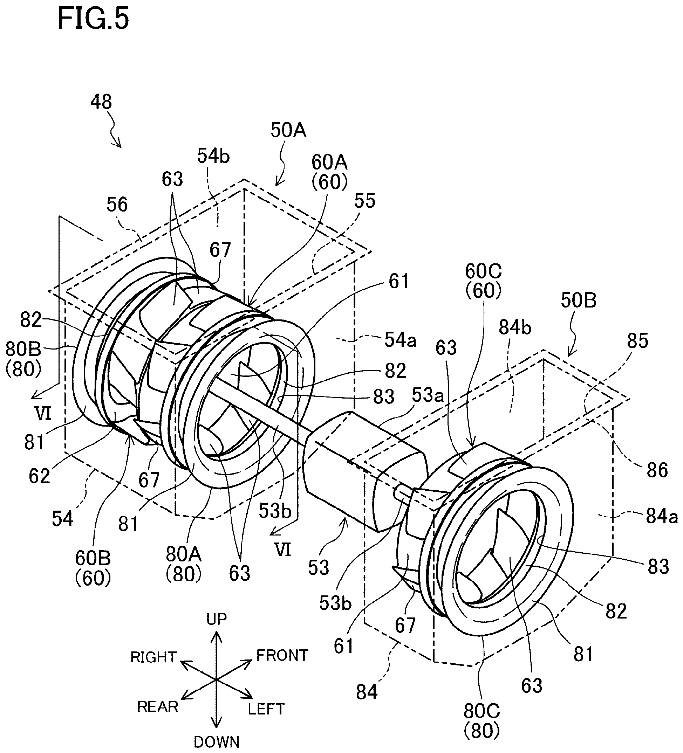

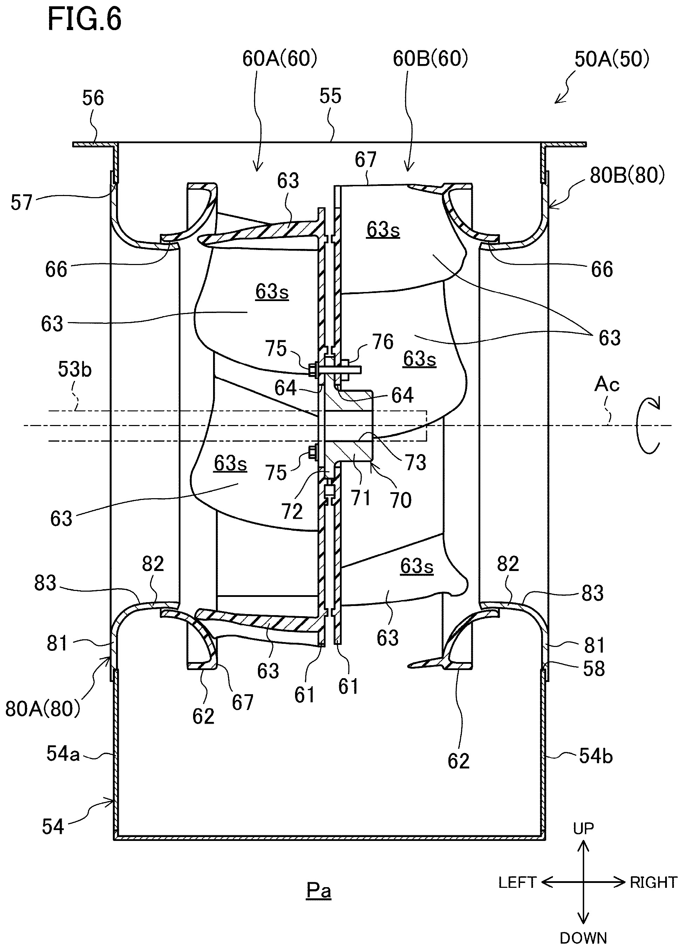

The first centrifugal fan (50A) is a double-suction centrifugal fan. As illustrated in FIGS. 5 and 6, the first centrifugal fan (50A) has a first impeller (60A), a second impeller (60B), a first fan casing (54), a first bell mouth (80A), and a second bell mouth (80B). The first impeller (60A) and the second impeller (60B) are coupled to the drive shaft (53b) of the first fan motor (53) via a first coupling component (70), and are disposed in this order from the side closer to the first fan motor (53) in the direction away from the first fan motor (53). That is, the first impeller (60A) is disposed on the left side, and the second impeller (60B) is disposed on the right side.

The first impeller (60A) and the second impeller (60B) basically have the same components. Each of the first impeller (60A) and the second impeller (60B) has a base plate (61), a shroud (62), and a plurality of blades (63). The first impeller (60A) is provided such that a fan inlet opening (66) formed in the shroud (62) is open toward the one side in the axial direction, which is the left side in this example. The second impeller (60B) is provided such that the fan inlet opening (66) formed in the shroud (62) is open toward the other side in the axial direction, which is the right side in this example.

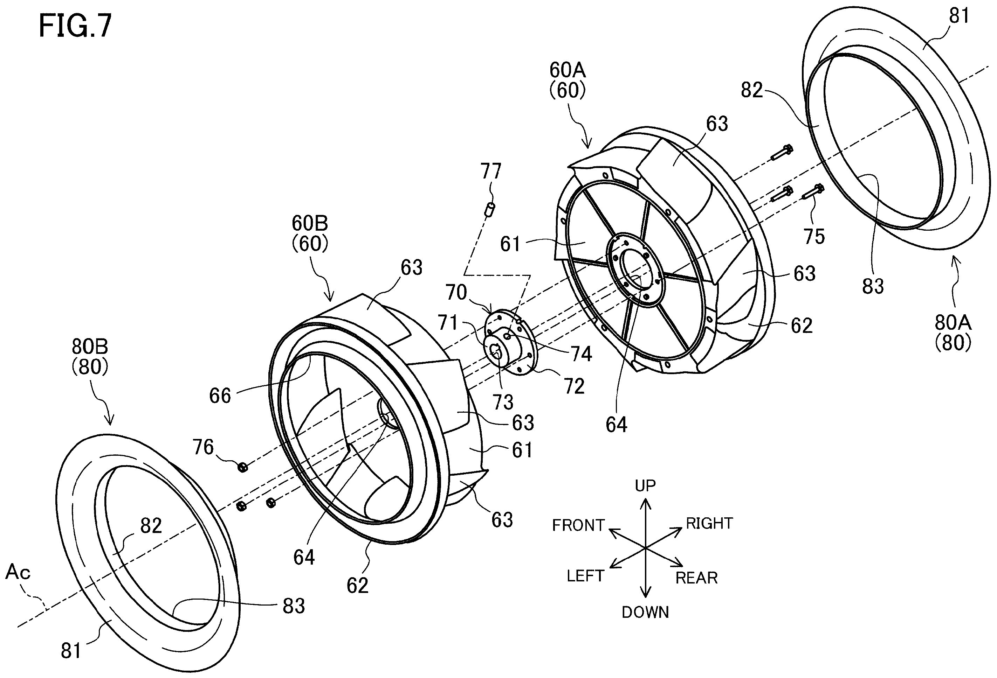

As is also illustrated in FIG. 7, the first impeller (60A) and the second impeller (60B) are integrated via the first coupling component (70), with their respective base plates (61) arranged back-to-back. The first coupling component (70) is a component that couples the first impeller (60A) and the second impeller (60B) to each other and receives the drive shaft (53b). The first coupling component (70) has a boss portion (71) and a flange portion (72). The boss portion (71) is a cylindrical portion through which an insertion hole (73) penetrates. The flange portion (72) is formed in a circular ring shape protruding from the boss portion (71) toward the outer peripheral side.

The boss portion (71) is inserted into a shaft hole (64) of the second impeller (60B). The flange portion (72) is sandwiched between the base plate (61) of the first impeller (60A) and the base plate (61) of the second impeller (60B). Both these base plates (61) are fastened together to the flange portion (72) by bolts (75) and nuts (76). The boss portion (71) has a pin hole (74). The pin hole (74) penetrates the boss portion (71) in the radial direction. The drive shaft (53b) is inserted into the insertion hole (73) of the boss portion (71). A retaining pin (77) is inserted into the drive shaft (53b) through the pin hole (74). The drive shaft (53b) is thereby fixed to the first coupling component (70).

The first impeller (60A) and the second impeller (60B) have a mirror symmetric structure or shape in a state of being integrated via the first coupling component (70). The blade (63) of the first impeller (60A) and the blade (63) of the second impeller (60B) are located so as to be shifted from each other by a half pitch in the circumferential direction of the impeller (60). When the first centrifugal fan (50A) is viewed in the axial direction, the blade (63) of the second impeller (60B) corresponds to a space between adjacent blades (63) of the first impeller (60A), and the blade (63) of the first impeller (60A) corresponds to a space between adjacent blades (63) of the second impeller (60B).

As illustrated in FIGS. 5 and 6, the first fan casing (54) houses the first impeller (60A) and the second impeller (60B). The first fan casing (54) is formed in a box shape with an open upper surface. The first fan casing (54) has a first upper opening (55) which is open upward. A first attachment piece (56) is provided at a peripheral edge portion of the first upper opening (55) of the first fan casing (54) and protrudes toward the outer peripheral side of the peripheral edge portion. The first attachment piece (56) is attached to the top panel (21a) of the casing (21). The first fan casing (54) is fixed to the top panel (21a) of the casing (21), with the first upper opening (55) corresponding to the first outlet opening (32a).

A first side opening (57) is formed in a left sidewall (54a) of the first fan casing (54). A second side opening (58) is formed in a right sidewall (54b) of the first fan casing (54). The first side opening (57) and the second side opening (58) are formed in, for example, a circular shape. The first side opening (57) corresponds to the fan inlet opening (66) of the first impeller (60A). The inner diameter of the first side opening (57) is larger than the inner diameter of the fan inlet opening (66) of the first impeller (60A). On the other hand, the second side opening (58) corresponds to the fan inlet opening (66) of the second impeller (60B). The inner diameter of the second side opening (58) is larger than the inner diameter of the fan inlet opening (66) of the second impeller (60B).

The first bell mouth (80A) is fitted in the first side opening (57) of the first fan casing (54). The first bell mouth (80A) is a member which is disposed on the inlet side of the first impeller (60A) to guide air to the first impeller (60A) from the outside of the first centrifugal fan (50A). The second bell mouth (80B) is fitted in the second side opening (58) of the first fan casing (54). The second bell mouth (80B) is a member which is disposed on the inlet side of the second impeller (60B) to guide air to the second impeller (60B) from the outside of the first centrifugal fan (50A).

The same bell mouth (80) is used as each of the first bell mouth (80A) and the second bell mouth (80B). The bell mouth (80) is a metal member and has a rim portion (81) and a cylindrical portion (82). The rim portion (81) is formed in a circular ring plate shape. The rim portion (81) of the first bell mouth (80A) is fixed to a peripheral edge portion of the first side opening (57) in the left sidewall (54a) of the first fan casing (54). The rim portion (81) of the second bell mouth (80B) is fixed to a peripheral edge portion of the second side opening (58) in the right sidewall (54b) of the first fan casing (54).

The cylindrical portion (82) of the bell mouth (80) is formed in a cylindrical shape protruding from an inner peripheral edge portion of the rim portion (81) into the first fan casing (54). The cylindrical portion (82) serves as an air passage (83) through which air flows. A distal end portion of the cylindrical portion (82) of the first bell mouth (80A) is inserted into the fan inlet opening (66) of the first impeller (60A), with a predetermined gap between the distal end portion and the peripheral edge portion of the fan inlet opening (66). A distal end portion of the cylindrical portion (82) of the second bell mouth (80B) is inserted into the fan inlet opening (66) of the second impeller (60B), with a predetermined gap between the distal end portion and the peripheral edge portion of the fan inlet opening (66).

In the first centrifugal fan (50A), when the first fan motor (53) is driven, the first impeller (60A) and the second impeller (60B) rotate together, and air is sucked through the air passage (83) of the first bell mouth (80A) and the air passage (83) of the second bell mouth (80B) on both left and right sides of the first fan casing (54). The air sucked through the air passage (83) of the first bell mouth (80A) passes through the first impeller (60A), and the air sucked through the air passage (83) of the second bell mouth (80B) passes through the second impeller (60B). The air having passed through the first impeller (60A) and the second impeller (60B) is discharged to the first outlet opening (32a) through the first upper opening (55).

### (2-6-2) Second Centrifugal Fan

The second centrifugal fan (50B) is a single-suction centrifugal fan. As illustrated in FIG. 5, the second centrifugal fan (50B) includes a third impeller (60C), a second fan casing (84), and a third bell mouth (80C). The third impeller (60C) is provided such that the fan inlet opening (66) formed in the shroud (62) is open toward the one side in the axial direction, which is the left side in this example. The third impeller (60C) is coupled to the drive shaft (53b) of the first fan motor (53) via a second coupling component (not illustrated). The second coupling component is a component similar to the first coupling component (70).

The second fan casing (84) houses the third impeller (60C). The second fan casing (84) is formed in a box shape with an open upper surface. The second fan casing (84) has a second upper opening (85) which is open upward. A second attachment piece (86) is provided at a peripheral edge portion of the second upper opening (85) of the second fan casing (84) and protrudes toward the outer peripheral side of the peripheral edge portion. The second attachment piece (86) is attached to the top panel (21a) of the casing (21). The second fan casing (84) is fixed to the top panel (21a) of the casing (21), with the second upper opening (85) corresponding to the second outlet opening (32b).

A third side opening (not illustrated) is formed in a left sidewall (84a) of the second fan casing (84). The third side opening is formed in, for example, a circular shape. The third side opening corresponds to the fan inlet opening (66) of the third impeller (60C). The inner diameter of the third side opening is larger than the inner diameter of the fan inlet opening (66) of the third impeller (60C). The third bell mouth (80C) is fitted in the third side opening of the second fan casing (84). The third bell mouth (80C) is a member which is disposed on the inlet side of the third impeller (60C) to guide air to the third impeller (60C) from the outside of the second centrifugal fan (50B). Although not illustrated, a hole is formed in a right sidewall (84b) of the second fan casing (84), into which hole the drive shaft (53b) is inserted.

A bell mouth (80) made of the same metal as the first bell mouth (80A) and the second bell mouth (80B) is used as the third bell mouth (80C). The rim portion (81) of the third bell mouth (80C) is fixed to a peripheral edge portion of the third side opening in the left sidewall (84a) of the second fan casing (84). The cylindrical portion (82) of the third bell mouth (80C) protrudes into the second fan casing (84). A distal end portion of the cylindrical portion (82) is inserted into the fan inlet opening (66) of the third impeller (60C), with a predetermined gap between the distal end portion and the peripheral edge portion of the fan inlet opening (66).

In the second centrifugal fan (50B), when the first fan motor (53) is driven, the third impeller (60C) rotates, and air is sucked through the air passage (83) of the third bell mouth (80C) on the left side of the second fan casing (84). The air sucked through the air passage (83) of the third bell mouth (80C) passes through the third impeller (60C) and is discharged to the second outlet opening (32b) through the second upper opening (85). The air discharged through the second outlet opening (32b) flows through the duct (100) together with the air discharged through the first outlet opening (32a), and is transferred to various locations in the indoor space (IS).

### (3) Configuration of Impeller

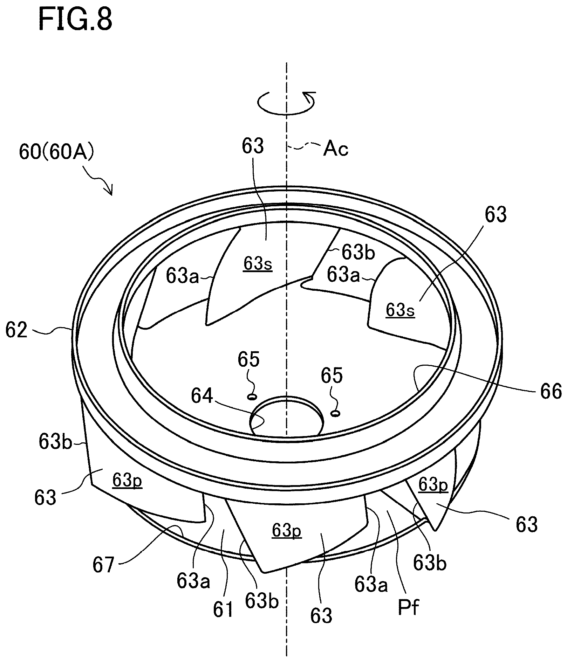

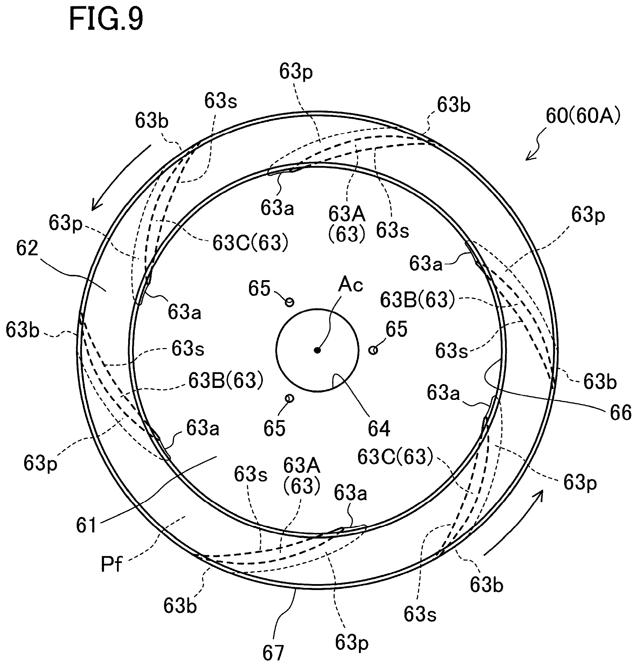

The impellers (60) having the same configuration except that the direction of the blades (63) is different are used as the first impeller (60A) and the second impeller (60B). An impeller (60) identical to the first impeller (60A) is used as the third impeller (60C). The configuration of the impeller (60) is illustrated in FIGS. 8 to12, taking the first impeller (60A) as an example. The impeller (60) rotates about the predetermined axis (Ac) which coincides with the axis of the drive shaft (53b). The impeller (60) is an integrally molded resin product. The base plate (61), the shroud (62), and a plurality of blades (63) are integrally molded from resin.

The base plate (61) is formed in a disc shape. The base plate (61) is a hub of the impeller (60), and is disposed substantially coaxially with the drive shaft (53b) of the first fan motor (53). The shaft hole (64) is formed in a center portion of the base plate (61). The drive shaft (53b) is inserted into the shaft hole (64) via the first coupling component (70) or the second coupling component. A plurality of fastening holes (65) (three fastening holes (65) in the example illustrated in FIG. 8 and other figures) are formed around the shaft hole (64) of the base plate (61). The plurality of fastening holes (65) are holes through which the bolts (75) are inserted, and are provided at equal intervals in the circumferential direction of the shaft hole (64).

The shroud (62) is formed in a circular ring shape. The shroud (62) is spaced apart from the base plate (61) in the axial direction along the axis (Ac) (left-right direction in this example) and faces the base plate (61). Further, the shroud (62) is substantially coaxial with the base plate (61). The outer diameter of the shroud (62) of this example is larger than the outer diameter of the base plate (61). The outer diameter of the shroud (62) may be equal to the outer diameter of the base plate (61), or may be smaller than the outer diameter of the base plate (61). The shroud (62) has the fan inlet opening (66). The fan inlet opening (66) is an opening through which air is sucked into the first impeller (60A). An inner peripheral edge portion of the shroud (62) protrudes away from the base plate (61) to form the fan inlet opening (66).

The plurality of blades (63) are provided between the base plate (61) and the shroud (62). The plurality of blades (63) are disposed at intervals in the circumferential direction about the axis (Ac), that is, in the direction of rotation of the impeller (60). The impeller (60) of this example has six blades (63). Each of the plurality of blades (63) is located in a region closer to the outer peripheral edge of the base plate (61). Each blade (63) is provided to stand in a direction in which the base plate (61) and the shroud (62) face each other. Each blade (63) has a cross-sectional shape extending so as to curve from the inner peripheral side toward the outer peripheral side in a cross section perpendicular to the axis (Ac).

Each of the plurality of blades (63) has an inner edge (63a) and an outer edge (63b). The inner edge (63a) is an edge located on the inner peripheral side of the blade (63). The inner edge (63a) is located on the front side in the direction of rotation of the impeller (60), and corresponds to the inner periphery of the fan inlet opening (66) in a plan view of the impeller (60). The outer edge (63b) is an edge located on the outer peripheral side of the blade (63). The outer edge (63b) is located on the rear side in the direction of rotation of the impeller (60), and corresponds to the outer peripheral edge of the shroud (62) in a plan view of the impeller (60). The inner edge (63a) and the outer edge (63b) extend in a direction inclined with respect to the axis (Ac).

The inner edge (63a) is inclined so as to extend outward in the radial direction of the impeller (60) and rearward in the direction of rotation of the impeller (60), from the base plate (61) toward the shroud (62). The inner edge (63a) is curved so as to protrude forward in the direction of rotation, and is curved more greatly on the shroud (62) side than on the base plate (61) side. The outer edge (63b) is inclined so as to extend outward in the radial direction of the impeller (60) and rearward in the direction of rotation of the impeller (60), from the base plate (61) toward the shroud (62). The outer edge (63b) is formed substantially linearly.

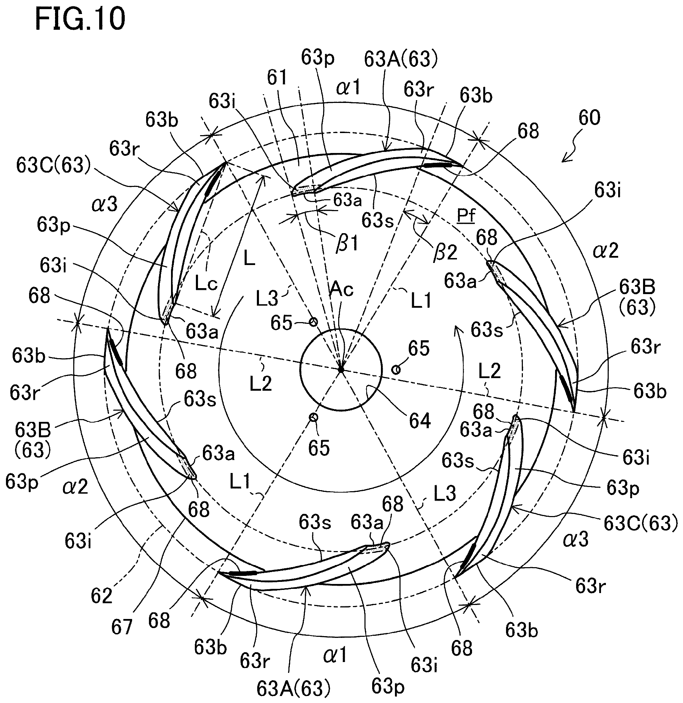

One end of each blade (63) in the axial direction is connected to a surface of the base plate (61) facing the shroud (62). The other end of each blade (63) in the axial direction is connected to a surface of the shroud (62) facing the base plate (61). In a cross section perpendicular to the axis (Ac) of the impeller (60), a line segment connecting the inner edge (63a) and outer edge (63b) of the blade (63) is a chord line (Lc). An example of the chord line (Lc) is illustrated in FIG. 10. The length of the chord line (Lc) is a chord length L. The chord length L is substantially constant along the entire blade (63) in the axial direction.

The inner edge (63a) and the outer edge (63b) have skew angles β1 and β2, respectively. The skew angle β1 of the inner edge (63a) is an angle formed by a line connecting an end of the inner edge (63a) on the base plate (61) side and the axis (Ac) and a line connecting an end of the inner edge (63a) on the shroud (62) side and the axis (Ac) in a plan view of the impeller (60). The skew angle β1 of the inner edge (63a) is, for example, 5° to 15°. The skew angle β2 of the outer edge (63b) is an angle formed by a line connecting an end of the outer edge (63b) on the base plate (61) side and the axis (Ac) and a line connecting an end of the outer edge (63b) on the shroud (62) side and the axis (Ac) in a plan view of the impeller (60). The skew angle β2 of the outer edge (63b) is, for example, 5° to 15°.

In a cross section perpendicular to the axis (Ac), the thickness of each blade (63) gradually increases from the inner edge (63a) toward the outer edge (63b) and then decreases. The thickness of each blade (63) is a thickness in a direction orthogonal to the chord line (Lc) of the blade (63). Each blade (63) has a teardrop shape with a maximum thickness at a position closer to the inner edge (63a). A portion of each blade (63) closer to the inner edge (63a) has a relatively large curvature compared with other portions. The portion with the relatively large curvature strictly restricts a withdrawal direction (d2) of a slide mold (240); therefore, the area of such a portion may be small or may be eliminated by providing a flat surface (68) (described later).

Each blade (63) further has a first surface (63p) and a second surface (63s). The first surface (63p) forms a pressure surface that receives a positive pressure during rotation of the impeller (60). The first surface (63p) faces the outside of the curve of the blade (63) between the inner edge (63a) and the outer edge (63b), and faces forward in the direction of rotation of the impeller (60) and toward the outer peripheral side of the impeller (60). The second surface (63s) forms a suction surface that receives a negative pressure during rotation of the impeller (60). The second surface (63s) faces the inside of the curve of the blade (63) between the inner edge (63a) and the outer edge (63b), and faces rearward in the direction of rotation of the impeller (60) and toward the axis (Ac) of the impeller (60).

A fan outlet opening (67) is formed between the outer peripheral edge of the base plate (61) and the outer peripheral edge of the shroud (62). The fan outlet opening (67) is an opening through which air is discharged from the impeller (60) to the outside. In the impeller (60), a portion of the space between the base plate (61) and the shroud (62) in which the blades (63) are disposed forms a fan flow path (Pf). The fan flow path (Pf) is an annular flow path continuous with the fan outlet opening (67), and is partitioned by the plurality of blades (63). The fan flow path (Pf) between adjacent blades (63) expands from the side closer to the axis (Ac) of the impeller (60) toward the outer peripheral side.

In the impeller (60), the plurality of blades (63) are disposed at unequal pitches in order to reduce NZ noise. The pitch of adjacent blades (63) refers to the pitch of the outer edges (63b) of the blades (63) in the circumferential direction. The pitch of adjacent blades (63) differs on both sides of each blade (63) in the circumferential direction. The six blades (63) in this embodiment are disposed at three different pitches. The six blades (63) include two first blades (63A), two second blades (63B), and two third blades (63C).

The first blade (63A) and the second blade (63B) are adjacent to each other in the circumferential direction. The second blade (63B) is positioned rearward of the first blade (63A) in the direction of rotation. The first blade (63A) is also adjacent to the third blade (63C) in the circumferential direction. The third blade (63C) is adjacent to the first blade (63A) on the opposite side of the second blade (63B) and is positioned forward of the first blade (63A) in the direction of rotation. The third blade (63C) is also adjacent to the second blade (63B) and is positioned rearward of the second blade (63B) in the direction of rotation.

As illustrated in FIG. 10, the two first blades (63A) are disposed 180 degrees apart from each other in the circumferential direction and are provided in point symmetry at positions corresponding to each other in the radial direction across the axis (Ac). The same applies to the two second blades (63B) and the two third blades (63C). The pitch between the first blade (63A) and the third blade (63C) is shorter than the pitch between the first blade (63A) and the second blade (63B). The pitch between the second blade (63B) and the third blade (63C) is shorter than the pitch between the first blade (63A) and the second blade (63B).

In a plan view of the fan inlet opening (66) of the impeller (60) as viewed from the front, a straight line connecting the outer edge (63b) of the first blade (63A) and the axis (Ac) is defined as a first straight line (L1); a straight line connecting the outer edge (63b) of the second blade (63B) and the axis (Ac) is defined as a second straight line (L2); and a straight line connecting the outer edge (63b) of the third blade (63C) and the axis (Ac) is defined as a third straight line (L3). The first blade (63A), the second blade (63B), and the third blade (63C) are disposed at pitches at which the first straight line (L1) and the third straight line (L3), the first straight line (L1) and the second straight line (L2), and the second straight line (L2) and the third straight line (L3) form different angles from each other.

For example, the first blade (63A) and the third blade (63C) are disposed at a pitch at which an angle α1 between the first straight line (L1) and the third straight line (L3) is 60°. The first blade (63A) and the second blade (63B) are disposed at a pitch at which an angle α2 between the first straight line (L1) and the second straight line (L2) is 69°. The second blade (63B) and the third blade (63C) are disposed at a pitch at which an angle α3 between the second straight line (L2) and the third straight line (L3) is 51°. As described above, the interval between the first blade (63A) and the third blade (63C) is narrower than the interval between the first blade (63A) and the second blade (63B), and is wider than the interval between the second blade (63B) and the third blade (63C).

The impeller (60) having a plurality of blades (63) disposed at unequal pitches as described above has a portion where the interval between adjacent blades (63) in the circumferential direction is narrower than that in the impeller (60) having the same number of blades (63) disposed at equal pitches. At the portion where the interval between adjacent blades (63) in the circumferential direction is narrow, the sliding direction of the slide mold (240) located between cavities (C) for forming the blades (63) is strictly restricted, and it is more likely that slide molds (240) interfere with each other. Accordingly, disposing the plurality of blades (63) at unequal pitches results in local reduction in the pitch of the blades (63) and therefore tends to cause interference between adjacent slide molds (240).

To address this, in the impeller (60) of this embodiment, adjacent blades (63) are configured to have partially different shapes. The first blade (63A), the second blade (63B), and the third blade (63C) have different shapes at portions corresponding to each other. Here, the "portions corresponding to each other" refer to portions having corresponding coordinate values on each axis in a three-dimensional coordinate system defined for each blade (63) by three axes, that is, an axis along the chord line (Lc) of the blade (63), an axis orthogonal to the chord line (Lc), and an axis extending in the axial direction. In this embodiment, the expression that the "blades (63) have different shapes" includes a case in which the surface shapes of the blades (63) differ only slightly to an extent that cannot be recognized by visual observation alone.

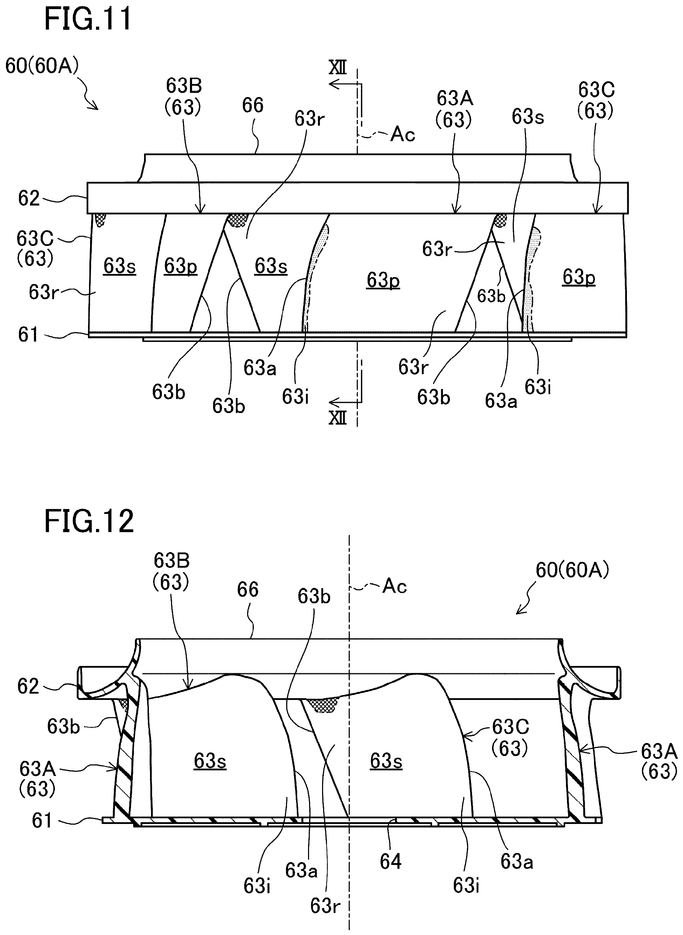

The portions at which the first blade (63A), the second blade (63B), and the third blade (63C) have different shapes are a portion of the blade (63) closer to the inner edge (63a), an inner end portion (63i) (portion indicated by dot hatching in FIGS. 10 to 12) which is a portion including the inner edge (63a) in this example, and the second surface (63s) of an outer portion (63r) (portion indicated by a thick line in FIG. 10, portion indicated by mesh hatching in FIGS. 11 and 12) which is a portion closer to the outer edge (63b). Here, the inner end portion (63i) refers to a portion extending from the inner edge (63a) to a position located at 10% of the chord length L of the blade (63). The outer portion (63r) refers to a portion extending from the outer edge (63b) to a position located at 30% of the chord length L of the blade (63).

The first surface (63p) of the inner end portion (63i) and the second surface (63s) of the outer portion (63r) of each blade (63) are closest to adjacent blades (63) on both sides in the direction of rotation of the impeller (60). Thus, the shapes of the first surface (63p) of the inner end portion (63i) and the second surface (63s) of the outer portion (63r) of each blade (63) are dominant factors that restrict the withdrawal direction (d2) of a slide mold (240), used to mold the first surface (63p) of one blade (63) and the second surface (63s) of the other blade (63) of a pair of adjacent blades (63), in a mold (205) for molding the impeller (60). In this embodiment, in order to adjust the withdrawal direction (d2) of the slide mold (240), the shapes of the first surface (63p) of the inner end portion (63i) and the second surface (63s) of the outer portion (63r) of each blade (63) are devised.

Strictly speaking, the portion at which the shape of the first surface (63p) of the inner end portion (63i) differs among the first blade (63A), the second blade (63B), and the third blade (63C) in this embodiment is a portion of the first surface (63p) of the inner end portion (63i) of each blade (63) excluding an end portion closer to the shroud (62) (see FIG. 11). Strictly speaking, the portion at which the shape of the second surface (63s) of the outer portion (63r) differs among the first blade (63A), the second blade (63B), and the third blade (63C) is a portion of the second surface (63s) at an end portion of the outer portion (63r) of each blade (63) closer to the shroud (62) (see FIG. 12).

The area of the flat surface (68) differs at portions where the shapes of the pair of adjacent blades (63) differ. The flat surface (68) is a flat surface extending in a direction intersecting a straight line connecting the outer edge (63b) of one blade (63) positioned forward in the direction of rotation and the inner edge (63a) of the other blade (63) positioned rearward in the direction of rotation in a plan view of the impeller (60). The direction in which the flat surface (68) extends in the plan view of the impeller (60) corresponds to the withdrawal direction (d2) of the slide mold (240). The area of the flat surface (68) varies depending on the angle formed with respect to the radial direction of the impeller (60).

Each of the first blade (63A), the second blade (63B), and the third blade (63C) of this embodiment has the flat surface (68) on the first surface (63p) of the inner end portion (63i) and on the second surface (63s) of the outer portion (63r), and the areas of the flat surfaces (68) of these blades differ between portions corresponding to each other. The smaller the pitch between each blade (63) and the adjacent blade (63) positioned forward in the direction of rotation of the impeller (60), the larger the areas of the flat surfaces (68) of the inner end portion (63i) and the outer portion (63r) of the blade (63).

Specifically, the area of the flat surface (68) of the inner end portion (63i) of the first blade (63A) is larger than the area of the flat surface (68) of the inner end portion (63i) of the second blade (63B), and the area of the flat surface (68) of the outer portion (63r) of the first blade (63A) is larger than the area of the flat surface (68) of the outer portion (63r) of the second blade (63B). The area of the flat surface (68) of the inner end portion (63i) of the third blade (63C) is larger than the area of the flat surface (68) of the inner end portion (63i) of the first blade (63A), and the area of the flat surface (68) of the outer portion (63r) of the third blade (63C) is larger than the area of the flat surface (68) of the outer portion (63r) of the first blade (63A).

Adjacent blades (63) have different thicknesses at portions where their shapes differ. That is, the thickness of the inner end portion (63i) of the first blade (63A), the thickness of the inner end portion (63i) of the second blade (63B), and the thickness of the inner end portion (63i) of the third blade (63C) differ at portions corresponding to each other according to the area of the flat surface (68). The thickness of the outer portion (63r) of the first blade (63A), the thickness of the outer portion (63r) of the second blade (63B), and the thickness of the outer portion (63r) of the third blade (63C) differ at portions corresponding to each other according to the area of the flat surface (68).

The thickness of the inner end portion (63i) of each of the first blade (63A), the second blade (63B), and the third blade (63C) is the thickness of the inner end portion (63i) in a direction orthogonal to the chord line (Lc) of the blade (63). The thickness of the outer portion (63r) of each of the first blade (63A), the second blade (63B), and the third blade (63C) is the thickness of the outer portion (63r) in the direction orthogonal to the chord line (Lc) of the blade (63). The smaller the pitch between each blade (63) and the adjacent blade (63) positioned forward in the direction of rotation of the impeller (60), the thinner the thickness of the inner end portion (63i) and the thickness of the outer portion (63r) of the blade (63) at portions where the blades (63) have different shapes.

Specifically, at the portions of the first blade (63A) and the second blade (63B) corresponding to each other, the thickness of the inner end portion (63i) of the first blade (63A) is thinner than the thickness of the inner end portion (63i) of the second blade (63B), and the thickness of the outer portion (63r) of the first blade (63A) is thinner than the thickness of the outer portion (63r) of the second blade (63B). At the portions of the first blade (63A) and the third blade (63C) corresponding to each other, the thickness of the inner end portion (63i) of the third blade (63C) is thinner than the thickness of the inner end portion (63i) of the first blade (63A), and the thickness of the outer portion (63r) of the third blade (63C) is thinner than the thickness of the outer portion (63r) of the first blade (63A).

The difference in thickness at portions where the inner end portions (63i) of the first blade (63A), the second blade (63B), and the third blade (63C) have different shapes is, for example, approximately 0.3 mm to 0.7 mm. The difference in thickness at portions where the second surfaces (63s) of the outer portions (63r) of the first blade (63A), the second blade (63B), and the third blade (63C) have different shapes is, for example, approximately 0.1 mm to 0.3 mm. The first blade (63A), the second blade (63B), and the third blade (63C) are identical to each other in shape in 90% or more of the respective first surfaces (63p).

More specifically, the area of the identically shaped portion is 90% or more of the area of the first surface (63p) of each of the first blade (63A), the second blade (63B), and the third blade (63C). In this specification, the expression of "being identical to each other in shape" means that a cross-sectional shape, curvature distribution, and a projected contour are the same or substantially the same. The identically shaped portion of the first surface (63p) of each of the plurality of blades (63), i.e., the area of the identically shaped portion of the first surface (63p), is preferably 95% or more of the area of the first surface (63p).

When the impeller (60) rotates, air is sucked through the fan inlet opening (66) and discharged through the fan outlet opening (67). The air passing through the impeller (60) flows from the inside to the outside of the fan flow path (Pf) in the radial direction. Each blade (63) increases the pressure of air by a change in the air flow speed in the direction of rotation in a region from the inner edge (63a) to the outer edge (63b) and by a difference in the circumferential speed between the inner edge (63a) and the outer edge (63b). Thus, the impeller (60) increases the pressure of the air sucked through the fan inlet opening (66) and then discharges the air through the fan outlet opening (67).

Each of the first impeller (60A) and the third impeller (60C) is formed as an impeller (60) for clockwise rotation. In the first impeller (60A), the inner edge (63a) of each blade (63) is positioned forward in the clockwise direction relative to the outer edge (63b) of the blade (63). The second impeller (60B) is formed as an impeller (60) for counterclockwise rotation. In the second impeller (60B), the inner edge (63a) of each blade (63) is positioned forward in the counterclockwise direction relative to the outer edge (63b) of the blade (63). The first impeller (60A) and the second impeller (60B) are coupled to the drive shaft (53b) of the same first fan motor (53) via the first coupling component (70), and form the double-suction centrifugal fan.

### (4) Manufacturing of Impeller

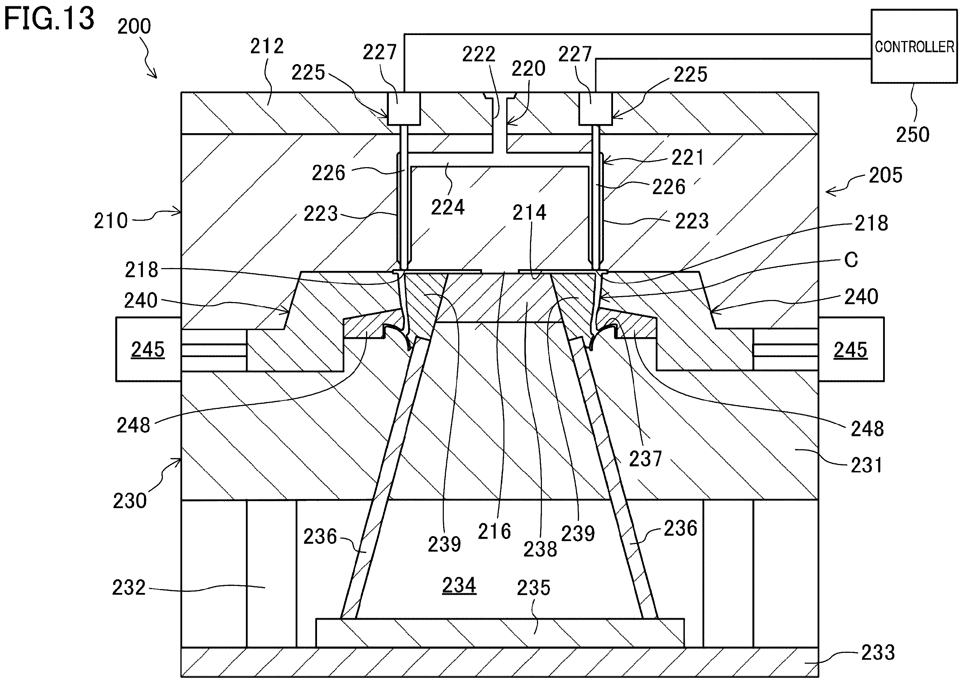

The impeller (60) is formed by injection molding. An injection molding apparatus (200) illustrated in FIG. 13 is used for molding the impeller (60).

### (4-1) Injection Molding Apparatus

The injection molding apparatus (200) includes a mold (205), an injection machine and an opening-closing mechanism (both not illustrated), and a controller (250). The opening-closing mechanism is a mechanism configured to open, close, and clamp the mold (205). The injection molding apparatus is configured to form therein a cavity (C) for molding the impeller (60) by closing the mold (205) and to inject molten resin (R) fed from the injection machine into the cavity (C).

### (4-1-1) Mold

The mold (205) includes a stationary mold (210), a movable mold (230), and the plurality of slide molds (240). The stationary mold (210) is an example of a first mold. The movable mold (230) is an example of a second mold.

The stationary mold (210) is attached to a stationary plate (212). A surface of the stationary mold (210) facing the movable mold (230) has a third molding surface (214). The third molding surface (214) is a surface that forms a surface of the base plate (61) facing opposite to the shroud (62), i.e., an outer surface facing the outside of the impeller (60). A columnar portion (216) for forming the shaft hole (64) and a protrusion (not illustrated) for forming the fastening hole (65) are provided at a center portion of the third molding surface (214). A plurality of gates (218) are formed in the stationary mold (210). Each gate (218) is an opening for injecting the molten resin (R), which is the raw material of the impeller (60), into the cavity (C), and is open to the third molding surface (214). Each gate (218) of this example is a direct gate.

The stationary mold (210) is provided with a resin flow path (220). The resin flow path (220) is configured to include a hot runner (221) and a sprue (222). The hot runner (221) has a plurality of branch passages (223) and a common passage (224). The branch passage (223) is provided for each gate (218). Each branch passage (223) extends from the gate (218) in a mold-opening direction and communicates with the gate (218). The common passage (224) extends in a direction orthogonal to the branch passages (223), coupling end portions of the branch passages (223) opposite from the gates (218), and communicates with the plurality of branch passages (223). The sprue (222) extends from the common passage (224) of the hot runner (221) in the mold-opening direction and penetrates the stationary plate (212) to communicate with a nozzle of the injection machine.

The stationary mold (210) is further provided with a plurality of needle valves (225). The needle valve (225) is provided for each gate (218). Each needle valve (225) is configured to include a needle (226) and a first actuator (227). The needle (226) is housed in the branch passage (223). The first actuator (227) is an apparatus that moves the needle (226) back and forth relative to the gate (218), and is provided in the stationary plate (212). A portion of the needle (226) opposite from the gate (218) is connected to the first actuator (227). Each gate (218) opens and closes in accordance with forward and backward movements of the needle (226). In addition, although not illustrated, the stationary mold (210) is provided with a cooling flow path through which coolant such as water flows.

The movable mold (230) is configured to include a base block (231), a center mold (238), and a plurality of inner cores (239). The base block (231) is attached to a movable plate (233) via a spacer block (232). The spacer block (232) has a housing chamber (234) therein. An ejector plate (235) is housed in the housing chamber (234). The ejector plate (235) supports a plurality of arms (236) penetrating the base block (231) in an inclined orientation with respect to the mold-opening direction. The plurality of arms (236) extend so as to approach a position closer to the axis (Ac), that is, to approach the columnar portion (216), from a position corresponding to the outer peripheral side of the impeller (60), from the ejector plate (235) toward the stationary mold (210).

The base block (231) has a fourth molding surface (237). The fourth molding surface (237) forms a surface of the shroud (62) facing opposite to the base plate (61), i.e., a surface facing the outside of the impeller (60). Although not illustrated, a cooling flow path through which coolant such as water flows is also formed in the base block (231). The center mold (238) is disposed at a portion of the base block (231) corresponding to the inside of the impeller (60). The plurality of inner cores (239) are located at the periphery of the center mold (238) and are disposed so as to surround the center mold (238). The center mold (238) and each inner core (239) are elements for forming a portion located closer to the center than the blades (63) on a surface of the base plate (61) facing the shroud (62). Each inner core (239) is also an element for forming part of the suction surface (63s) of each blade (63), specifically, a portion closer to the inner edge (63a).

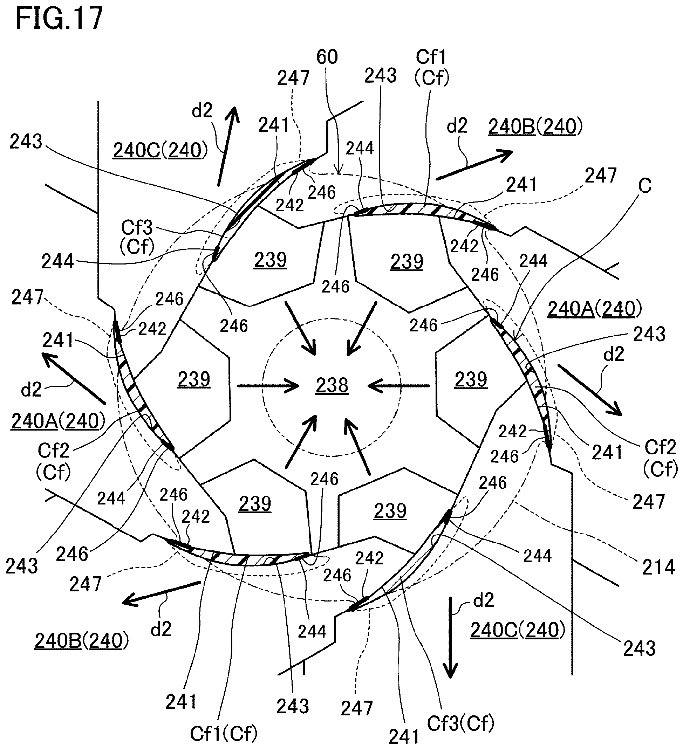

Each inner core (239) is coupled to the arm (236). The ejector plate (235) changes the degree of inclination of the arm (236) in conjunction with the opening and closing operation of the mold (205). As the mold (205) is closed, the ejector plate (235) reduces the degree of inclination of each arm (236) with respect to the mold-opening direction, and the plurality of inner cores (239) are displaced radially outward so as to spread in directions corresponding to the outer peripheral side of the impeller (60). On the other hand, as the mold (205) is opened, the ejector plate (235) increases the degree of inclination of each arm (236) with respect to the mold-opening direction, and the plurality of inner cores (239) are displaced so as to approach each other and converge toward the position corresponding to the axis (Ac) of the impeller (60) (the displacement direction is indicated by arrows in FIG. 17).

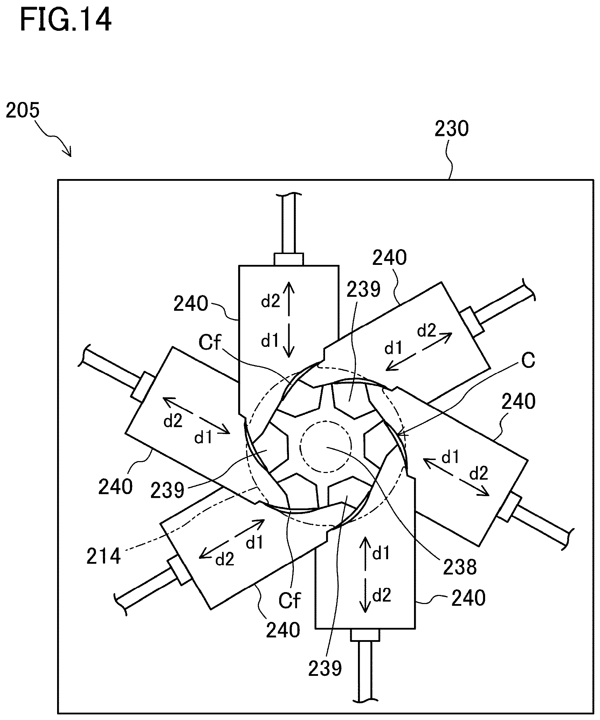

The plurality of slide molds (240) are disposed between the stationary mold (210) and the movable mold (230) and are spaced apart from each other so as to surround the third molding surface (214) and the fourth molding surface (237). As illustrated in FIG. 14, the slide mold (240) is provided for each pair of adjacent blades (63). That is, there are six slide molds (240) in this example. Each slide mold (240) has a first molding surface (241) and a second molding surface (243). The first molding surface (241) is a surface for forming the other part of the suction surface (63s) of one of the adjacent blades (63), specifically, a portion closer to the outer edge (63b). The second molding surface (243) is a surface for forming the pressure surface (63p) of the other blade (63) of the adjacent blades (63).

Each slide mold (240) is provided so as to be slidable in a return direction (d1) corresponding to a direction toward the axis (Ac) of the impeller (60) and in the withdrawal direction (d2) corresponding to a direction toward the outer peripheral side of the impeller (60). A second actuator (245) is connected to each slide mold (240). The plurality of slide molds (240) are driven by the second actuators (245) to slide in the return direction (d1) or the withdrawal direction (d2). Each of the slide molds (240) slides in the return direction (d1) between the stationary mold (210) and the movable mold (230), thereby closing the mold (205) and forming the cavity (C).

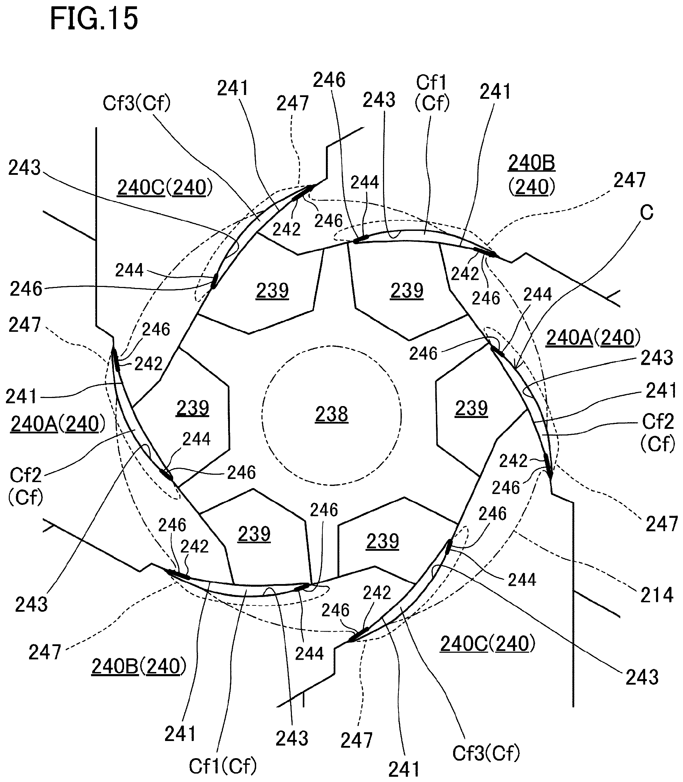

As illustrated in FIG. 15, the cavity (C) includes a plurality of blade cavities (Cf) for molding the respective blades (63). The plurality of blade cavities (Cf) include two first blade cavities (Cf1), two second blade cavities (Cf2), and two third blade cavities (Cf3). The first blade cavities (Cf1) are portions, in the cavity (C), for molding the first blades (63A). The second blade cavities (Cf2) are portions, in the cavity (C), for molding the second blades (63B). The third blade cavities (Cf3) are portions, in the cavity (C), for molding the third blades (63C).

The pitch in a direction corresponding to the circumferential direction of the impeller (60) between the first blade cavity (Cf1) and the third blade cavity (Cf3) is shorter than the pitch in the direction corresponding to the circumferential direction of the impeller (60) between the first blade cavity (Cf1) and the second blade cavity (Cf2). The pitch in the direction corresponding to the circumferential direction of the impeller (60) between the second blade cavity (Cf2) and the third blade cavity (Cf3) is shorter than the pitch in the direction corresponding to the circumferential direction of the impeller (60) between the first blade cavity (Cf1) and the second blade cavity (Cf2).

The plurality of slide molds (240) include two first slide molds (240A), two second slide molds (240B), and two third slide molds (240C). Each of the first slide molds (240A) is a slide mold (240) located between the first blade cavity (Cf1) and the second blade cavity (Cf2). Each of the second slide molds (240B) is a slide mold (240) located between the first blade cavity (Cf1) and the third blade cavity (Cf3). Each of the third slide molds (240C) is a slide mold (240) located between the second blade cavity (Cf2) and the third blade cavity (Cf3).

In each adjacent pair of slide molds (240), the areas of the slide surfaces (246) differ from each other both at the outer surface portions (242) of the respective first molding surfaces (241), which form portions of the respective blades (63) closer to the outer edge (63b), and at the inner surface portions (244) of the respective second molding surfaces (243), which form portions of the respective blades (63) closer to the inner edge (63a). The slide surface (246) is a surface extending parallel to the sliding direction of the slide mold (240), and forms a surface for forming the flat surface (68) of the blade (63). Each of the first slide mold (240A), the second slide mold (240B), and the third slide mold (240C) of this embodiment has the slide surface (246) (indicated by a thick line in FIG. 15) on the outer surface portion (242) of the first molding surface (241) and on the inner surface portion (244) of the second molding surface (243), and the areas of the slide surfaces (246) of the molds differ among portions corresponding to each other.

The smaller the pitch of the blade cavities (Cf) on both sides of the slide mold (240), the larger the areas of the slide surfaces (246) on the inner surface portion (244) and the outer surface portion (242) of the slide mold (240). Specifically, the area of the slide surface (246) of the inner surface portion (244) of the second slide mold (240B) is larger than the area of the slide surface (246) of the inner surface portion (244) of the first slide mold (240A), and the area of the slide surface (246) of the outer surface portion (242) of the second slide mold (240B) is larger than the area of the slide surface (246) of the outer surface portion (242) of the first slide mold (240A). In addition, the area of the slide surface (246) of the inner surface portion (244) of the third slide mold (240C) is larger than the area of the slide surface (246) of the inner surface portion (244) of the second slide mold (240B), and the area of the slide surface (246) of the outer surface portion (242) of the third slide mold (240C) is larger than the area of the slide surface (246) of the outer surface portion (242) of the second slide mold (240B).

An end portion of each slide mold (240) in the return direction (d1) abuts against the inner core (239). Since the plurality of blades (63) of the impeller (60) to be molded are disposed at unequal pitches, a boundary position between the inner core (239) and the end portion of the slide mold (240) in the direction along the chord line (Lc) of the blade cavity (Cf) differs among the first blade cavity (Cf1), the second blade cavity (Cf2), and the third blade cavity (Cf3). Each slide mold (240) has an outer peripheral parting line (247) for forming the outer edge (63b) of the blade (63) as the edges of the first molding surface (241) and the second molding surface (243).

Each of the outer peripheral parting lines (247) of adjacent slide molds (240), specifically, the first slide mold (240A) and the second slide mold (240B), the second slide mold (240B) and the third slide mold (240C), and the first slide mold (240A) and the third slide mold (240C), is a line that forms the outer edge (63b) of the common blade (63). Each of the outer peripheral parting lines (247) on the first molding surface (241) and the second molding surface (243) of each slide mold (240) is inclined with respect to the mold-opening direction so as to extend further in a direction corresponding to the radially outward direction of the impeller (60) from the cavity portion for molding the base plate (61) toward the cavity portion for molding the shroud (62) to form the skew angle β2 of the corresponding outer edge (63b).

Each slide mold (240) has a movable portion (248) for forming a surface of the shroud (62) facing the base plate (61) on the outer peripheral side of the impeller (60). Each slide mold (240) is configured such that, when the mold (205) is opened, the movable portion (248) is displaceable to avoid interference with a molded product in the cavity (C) and the movable mold (230). The shape of the first molding surface (241) of each slide mold (240) is in a mirror relationship with the shape of the suction surface (63s) of the corresponding blade (63) of the impeller (60) to be molded, and the shape of the second molding surface (243) is in a mirror relationship with the shape of the pressure surface (63p) of the corresponding blade (63) of the impeller (60) to be molded.

In this embodiment, the plurality of slide molds (240) are identical to each other in shape in 90% or more of the respective second molding surfaces (243). The identically shaped portion of the second molding surface (243) of each of the plurality of slide molds (240) is preferably 95% or more of the second molding surface (243). More specifically, the area of the identically shaped portion is 90% or more, preferably 95% or more, of the area of the second molding surface (243) of each of the first slide mold (240A), the second slide mold (240B), and the third slide mold (240C).

### (4-1-2) Controller

The controller (250) is a controller based on a well-known microcomputer. The controller (250) has a processor and a memory. The memory stores various programs and data. The processor reads and executes the program from the memory, and performs control related to the molding of the impeller (60) by the injection molding apparatus (200). The controller (250) is electrically connected to each of the first actuators (227) of the plurality of needle valves (225) and to the injection machine and the opening-closing mechanism. The controller (250) controls the timing of injecting the molten resin (R) from each gate (218), with the mold (205) being closed and the cavity (C) being formed inside the mold (205).

### (4-2) Impeller Molding Process

A method of manufacturing the impeller (60) using the injection molding apparatus (200) includes, as a molding process, a mold-clamping step, a molding step, and a mold-opening step. The mold-clamping step, the molding step, and the mold-opening step are performed in this order.

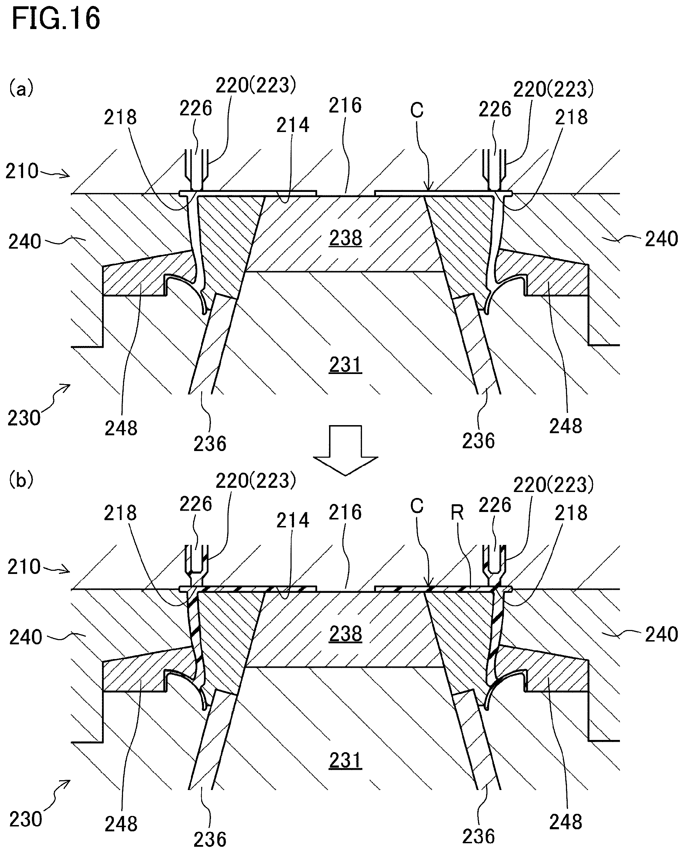

First, in the mold-clamping step, the opening-closing mechanism of the mold (205) is actuated to bring the stationary mold (210) and the movable mold (230) close to each other, and each second actuator (245) is actuated to slide the plurality of slide molds (240) in the return direction (d1). By doing so, as illustrated in FIG. 16(a), the mold (205) is closed with the stationary mold (210), the movable mold (230), and the slide molds (240) in predetermined positional relationships on the closed side, thereby forming the cavity (C) in the mold (205). Further, pressure is applied to the closed mold (205) using a toggle or a cylinder to clamp the mold (205).

In the subsequent molding step, the injection machine is actuated, and the first actuator (227) of each needle valve (225) is also actuated, to retract the needle (226) corresponding to the respective gate (218), thereby opening the gate (218). As illustrated in FIG. 16(b), the molten resin (R) supplied to the resin flow path (220) in the mold (205) by the injection machine is injected into the cavity (C) from each gate (218), thereby filling the cavity (C) with the resin (R). When the entire cavity (C) has been filled with the resin (R), injection of the resin (R) from the injection machine is ended, and the first actuator (227) of each needle valve (225) is actuated to move the needle (226) corresponding to the respective gate (218) forward, thereby closing each gate (218). The resin (R) filling the cavity (C) is solidified by cooling the mold (205). By cooling and solidifying the resin (R), the impeller (60), in which the base plate (61), the shroud (62), and the plurality of blades (63) are integrally formed, is molded in the cavity (C).

Then, in the mold-opening step, the opening-closing mechanism of the mold (205) is actuated to separate the stationary mold (210) and the movable mold (230) from each other, and each second actuator (245) is actuated to slide the plurality of slide molds (240) in the withdrawal direction (d2) as illustrated in FIG. 17. By doing so, the mold (205) is opened with the stationary mold (210), the movable mold (230), and the slide molds (240) in predetermined positional relationships on the open side. At this time, the inner cores (239) are displaced toward each other toward a position corresponding to the axis (Ac) of the impeller (60) as the arms (236) change their degree of inclination, thereby avoiding interference with the shroud (62) of the impeller (60). When the mold (205) is opened, the impeller (60) can be removed from the mold (205).

After the impeller (60) is removed from the mold (205), post-processing is performed, such as removing burrs from the impeller (60), if any are present. The impeller (60) can be manufactured using the injection molding apparatus (200) in this manner.

### (5) Features of Embodiment

In the centrifugal fan (50) of this embodiment, the pitch of the outer edges (63b) of adjacent blades (63) in the circumferential direction differs on both sides of each blade (63) in the circumferential direction. When the plurality of blades (63) are disposed at unequal pitches in this manner, the NZ noise due to rotation of the impeller (60) is reduced. In each adjacent pair of blades (63), the areas of the flat surfaces (68) differ from each other both on the first surfaces (63p) of the respective inner end portions (63i) and on the second surfaces (63s) of the respective outer portions (63r). The first surface (63p) of the inner end portion (63i) and the second surface (63s) of the outer portion (63r) of each blade (63) form portions closest to other blades (63) adjacent in the direction of rotation of the impeller (60). Thus, the withdrawal direction (d2) of the slide mold (240) is restricted by the shapes of the first surfaces (63p) of the respective inner end portions (63i) and the shapes of the second surfaces (63s) of the respective outer portions (63r) of the pair of adjacent blades (63). The flat surface (68) formed at the shape of the first surface (63p) of the inner end portion (63i) or at the second surface (63s) of the outer portion (63r) forms a surface extending in the sliding direction of the slide mold (240) in the injection molding apparatus (200). Thus, when the areas of the flat surfaces (68) differ at the first surfaces (63p) of the respective inner end portions (63i) or at the second surfaces (63s) of the respective outer portions (63r) in the pair of adjacent blades (63), the angles formed by the withdrawal directions (d2) of the adjacent slide molds (240) with respect to the direction corresponding to the radial direction of the impeller (60) can be made different from each other. This makes it possible to adjust the withdrawal directions (d2) of the plurality of slide molds (240) for molding the blades (63) such that the slide molds (240) do not interfere with each other or with other portions of the mold (205) in the mold (205) of the injection molding apparatus (200). Thus, the integrally molded resin impeller (60) in which the plurality of blades (63) are disposed at unequal pitches can be easily manufactured.

In the centrifugal fan (50) of this embodiment, the pitch between the first blade (63A) and the third blade (63C) is shorter than the pitch between the first blade (63A) and the second blade (63B), and the area of the flat surface (68) at the second surface (63s) of the outer portion (63r) of the third blade (63C) is larger than the area of the flat surface (68) at the second surface (63s) of the outer portion (63r) of the first blade (63A). The shorter the pitch of adjacent blades (63), the stricter the restriction on the withdrawal direction (d2) of the corresponding slide mold (240) between the adjacent blades (63). To address this, in the pair of adjacent blades (63), the area of the flat surface (68) at the second surface (63s) of the outer portion (63r) of the blade (63) positioned forward in the direction of rotation is increased as the pitch of the pair of adjacent blades (63) decreases, thereby relaxing the restriction on the withdrawal direction (d2) of the slide mold (240). Thus, the withdrawal direction (d2) of the corresponding slide mold (240) between the first blade (63A) and the second blade (63B) and the withdrawal direction (d2) of the corresponding slide mold (240) between the first blade (63A) and the third blade (63C) can be adjusted such that both of these slide molds (240) do not interfere with each other.

In the centrifugal fan (50) of this embodiment, the area of the flat surface (68) on the first surface (63p) of the inner end portion (63i) of the third blade (63C) is larger than the area of the flat surface (68) on the first surface (63p) of the inner end portion (63i) of the first blade (63A). In the pair of adjacent blades (63), the area of the flat surface (68) at the first surface (63p) of the inner end portion (63i) of the blade (63) positioned forward in the direction of rotation is increased as the pitch of the pair of adjacent blades (63) decreases, thereby relaxing the restriction on the withdrawal direction (d2) of the slide mold (240). Thus, the withdrawal direction (d2) of the corresponding slide mold (240) between the first blade (63A) and the second blade (63B) and the withdrawal direction (d2) of the corresponding slide mold (240) between the first blade (63A) and the third blade (63C) can be adjusted such that both of these slide molds (240) do not interfere with each other.

In the centrifugal fan (50) of this embodiment, the flat surface (68) is provided at the first surface (63p) of the inner end portion (63i) of the blade (63). The blade (63) has a cross-sectional shape extending so as to curve from the inner peripheral side toward the outer peripheral side in a cross section perpendicular to the axis (Ac). Thus, in the mold (205) of the injection molding apparatus (200), the withdrawal direction (d2) of the slide mold (240) for molding the blade (63) is restricted to a predetermined range due to the shape of the inner end portion (63i) of the blade (63). To address this, the thickness of the inner end portion (63i) of the first blade (63A) and the thickness of the inner end portion (63i) of the second blade (63B) differ at portions corresponding to each other according to the presence or absence of the flat surface (68) or according to the area of the flat surface (68). The range of restriction on the withdrawal direction (d2) of the slide mold (240) can be changed by varying the thickness of the inner end portion (63i) of the blade (63). Thus, the withdrawal direction (d2) of the slide mold (240) for forming the first surface (63p) of the first blade (63A) and the withdrawal direction (d2) of the slide mold (240) for forming the first surface (63p) of the second blade (63B) can be adjusted such that these slide molds (240) do not interfere with each other.

In the centrifugal fan (50) of this embodiment, the pitch between the first blade (63A) and the third blade (63C) is shorter than the pitch between the first blade (63A) and the second blade (63B), and the thickness of the inner end portion (63i) of the first blade (63A) is thinner than the thickness of the inner end portion (63i) of the second blade (63B). The shorter the pitch of adjacent blades (63), the stricter the restriction on the withdrawal direction (d2) of the corresponding slide mold (240) between the adjacent blades (63). To address this, in adjacent blades (63), the thickness of the inner end portion (63i) of the blade (63) positioned rearward in the direction of rotation is reduced as the pitch of the adjacent blades (63) decreases, thereby relaxing the restriction on the withdrawal direction (d2) of the slide mold (240). Thus, the withdrawal direction (d2) of the corresponding slide mold (240) between the first blade (63A) and the second blade (63B) and the withdrawal direction (d2) of the corresponding slide mold (240) between the first blade (63A) and the third blade (63C) can be adjusted such that both of these slide molds (240) do not interfere with each other.

In the centrifugal fan (50) of this embodiment, the flat surface (68) is provided at the second surface (63s) of the outer portion (63r) of the blade (63). The second surface (63s) forms a suction surface of the blade (63). The shape of the suction surface of the blade (63) does not affect the air-delivery performance as greatly as the shape of the pressure surface. Thus, the integrally molded resin impeller (60) in which the plurality of blades (63) are disposed at unequal pitches can be easily manufactured while suppressing degradation of the air-delivery performance of the centrifugal fan (50).

In the centrifugal fan (50) of this embodiment, the plurality of blades (63) are identical to each other in shape in 90% or more of the respective first surfaces (63p). The first surface (63p) forms the pressure surface of the blade (63). According to this configuration, the plurality of blades (63) are different from each other in shape in less than 10% of the respective first surfaces (63p), thereby making it possible to adjust the withdrawal directions (d2) of the plurality of slide molds (240) for molding the blades (63) such that the slide molds (240) do not interfere with each other or with other portions of the mold (205) in the mold (205) of the injection molding apparatus. Since the plurality of blades (63) are identical to each other in shape in 90% or more of the respective first surfaces (63p), it is possible to suppress degradation of the air-delivery performance of the centrifugal fan (50).

In the centrifugal fan (50) of this embodiment, the outer edge (63b) of each blade (63) is inclined with respect to the axis (Ac), and extends in the direction corresponding to the radially outward direction of the impeller (60) while extending from the base plate (61) toward the shroud (62), thereby forming the skew angle. In the mold (205) for molding the impeller (60) having the blades (63) with such skew angles, restriction on the withdrawal direction (d2) of the slide mold (240) is strict, because the first surface (63p) and the second surface (63s) formed by the slide mold (240) are long in the sliding direction, and the removal distance of the slide mold (240) from the impeller (60) in opening the mold (205) is long. Thus, the technique of the present disclosure is particularly effective in the method of manufacturing such an impeller (60).

In the centrifugal fan (50) of this embodiment, the number of blades (63) is six. If the number of blades (63) is five or less, the workload per blade (63) becomes relatively large, which increases abnormal noise during air blowing. In addition, there is also a concern that the static pressure characteristics of the impeller (60) are degraded. When the static pressure characteristics of the impeller (60) are degraded, the number of rotations required for a required volume of air increases, and thus, the shaft power increases. In contrast, when the number of blades (63) is six or more, the static pressure characteristics of the impeller (60) can be maintained, thereby reducing the shaft power, while suitably reducing noise associated with the rotational operation of the impeller (60). In particular, the six blades (63) are suitable for ensuring the performance of the impeller (60) and establishing the molding method of this example.

The air conditioner (1) of this embodiment includes the centrifugal fan (50). Since the impeller (60) of the centrifugal fan (50) is integrally molded from resin, the impeller (60) is suitable for mass production because a step of assembling components can be omitted, as compared to a centrifugal fan using an assembly-type impeller formed by integrating a base plate (61), a shroud (62), and a plurality of blades (63), which are separate components. Further, the weight of the centrifugal fan (50) can be reduced and the centrifugal fan (50) is less likely to vibrate during rotation, as compared to a case in which at least one of the base plate (61), the shroud (62), or the plurality of blades (63) is formed of a metal component. This contributes to improving the energy efficiency of the air conditioner (1).

### <<Other Embodiments>>

The number of blades (63) of the impeller (60) may be five or less, or seven or more. However, as described above, the number of blades (63) is preferably six or more because the static pressure characteristics of the impeller (60) can be maintained and shaft power can be reduced while suitably reducing noise associated with rotation of the impeller (60). The pitches between adjacent blades (63) may differ among all the sets of the blades (63). The number of blades (63) may be any number as long as the plurality of blades (63) are arranged at unequal pitches, that is, as long as the pitch of adjacent blades (63) differs on both sides of each blade (63) in the circumferential direction.

In the impeller (60), the portion at which the presence or absence of the flat surface (68) or the area of the flat surface (68) differs between adjacent blades (63) may be only the first surface (63p) of the inner end portion (63i), or may be only the second surface (63s) of the outer portion (63r). In terms of reducing degradation of air-delivery performance of the impeller (60), it is preferable that such a portion is only the second surface (63s) of the outer portion (63r) or a relatively small range of the first surface (63p) of the inner end portion (63i).

In the impeller (60), the first surfaces (63p) of the inner end portions (63i) or the second surfaces (63s) of the outer portions (63r) of some adjacent blades (63) may differ in the presence or absence of the flat surface (68). For example, the first surfaces (63p) of the inner end portions (63i) of the first blade (63A) and the third blade (63C) and the second surfaces (63s) of the outer portions (63r) of the second blade (63B) and the third blade (63C) may have the flat surfaces (68) similarly to the above embodiment, while one or both of the second surface (63s) of the outer portion (63r) of the first blade (63A) and the first surface (63p) of the inner end portion (63i) of the second blade (63B) do not have to have the flat surface (68). In short, it is sufficient that, at the first surface (63p) of the inner end portion (63i) or at the second surface (63s) of the outer portion (63r), the presence or absence of the flat surface (68), or the area of the flat surface (68), differs between a pair of adjacent blades (63), so that the withdrawal directions (d2) of the slide molds (240) can be adjusted, in the mold (205) of the injection molding apparatus (200) for molding the impeller (60), such that adjacent slide molds (240) do not interfere with each other or with other portions of the mold (205).

Both the first centrifugal fan (50A) and the second centrifugal fan (50B) may be double-suction centrifugal fans or single-suction centrifugal fans. The first centrifugal fan (50A) and the second centrifugal fan (50B) may be disposed in the lower half of the inside of the casing (21). The number of centrifugal fans (50) serving as the indoor fan (48) may be one, or may be three or more.

The indoor unit (3) may be configured as a wall-mounted type. The indoor unit (3) may be disposed on the front side of a ceiling surface and may be suspended from the ceiling surface. The indoor unit (3) may be disposed on the back side of the ceiling surface and may be suspended from a ceiling beam. The indoor unit (3) may be installed using any installation method.

The air conditioner (1) is not necessarily the paired type having one outdoor unit (2) and one indoor unit (3), and may be an outdoor multi-type having a plurality of outdoor units (2) or an indoor multi-type having a plurality of indoor units (3).

The air conditioner (1) is not necessarily the separate type having the indoor unit (3) and the outdoor unit (2), and may be an integrated type having only an indoor unit without an outdoor unit (2). In this case, the indoor unit has a heat-source-side heat exchanger and the like.

The space to be air-conditioned by the air conditioner (1) is not limited to the indoor space (IS) such as a computer room, a factory, or a warehouse. The target space to be air-conditioned may be a space in a store or a building, or an indoor space of a house.

The air conditioner (1) does not necessarily include the four-way switching valve (26) in the refrigerant circuit (6). In this case, the air conditioner (1) may be configured as a heater capable of performing only a heating operation. The air conditioner (1) may be configured as a cooler capable of performing only a cooling operation. The air conditioner (1) may be configured to perform a dehumidifying operation and a ventilation operation.

In the above embodiment, the air conditioner (1) has been described as an example of a refrigeration apparatus using a centrifugal fan (50); however, the refrigeration apparatus is not limited thereto. The refrigeration apparatus in which the centrifugal fan (50) according to the present disclosure can be used may be a water heater, a chiller unit, a cooling apparatus that cools air inside a casing, or the like. The cooling apparatus cools the air inside a refrigerator, a freezer, and a container, for example.

While the embodiments and variations thereof have been described above, it will be understood that various changes in form and details may be made without departing from the spirit and scope of the claims. The foregoing embodiments and variations thereof may be combined or replaced with each other without deteriorating the intended functions of the present disclosure.

### INDUSTRIAL APPLICABILITY

As described above, the present disclosure is useful for a centrifugal fan and a refrigeration apparatus including the centrifugal fan.

### DESCRIPTION OF REFERENCE CHARACTERS

- 1: Air Conditioner (Refrigeration Apparatus)
- 50: Centrifugal Fan
- 60: Impeller
- 61: Base Plate
- 62: Shroud
- 63: Blade
- 63A: First Blade
- 63B: Second Blade
- 63C: Third Blade
- 63a: Inner Edge
- 63b: Outer Edge
- 63i: Inner End Portion
- 63r: Outer Portion
- 63p: First Surface
- 63s: Second Surface
- 68: Flat Surface
- Ac: Axis
- Lc: Chord Line

## Claims

1. A centrifugal fan comprising:
an impeller (60) configured to rotate about a predetermined axis (Ac), wherein
the impeller (60) has a base plate (61), an annular shroud (62) spaced apart from the base plate (61) in an axial direction along the axis (Ac), and a plurality of blades (63) spaced apart from each other in a circumferential direction about the axis (Ac) between the base plate (61) and the shroud (62),
the base plate (61), the shroud (62), and the plurality of blades (63) are integrally molded from resin,
each of the plurality of blades (63) has
a cross-sectional shape extending so as to curve from an inner peripheral side toward an outer peripheral side in a cross section perpendicular to the axis (Ac),
an inner edge (63a) which is an edge of the blade (63) on the inner peripheral side,
an outer edge (63b) which is an edge of the blade (63) on the outer peripheral side,
a first surface (63p) facing an outside of the curve of the blade (63) between the inner edge (63a) and the outer edge (63b), and
a second surface (63s) facing an inside of the curve of the blade (63) between the inner edge (63a) and the outer edge (63b),
a pitch of the outer edges (63b) of a pair of adjacent blades (63) in the circumferential direction differs on both sides of each blade (63) in the circumferential direction, and
the presence or absence of a flat surface (68), or an area of the flat surface (68), differs between the pair of adjacent blades (63) at the first surfaces (63p) of inner end portions (63i) closer to the respective inner edges (63a) or at the second surfaces (63s) of outer portions (63r) closer to the respective outer edges (63b), the flat surface (68) extending in a direction intersecting a straight line connecting the outer edge (63b) of one of the pair of blades (63) positioned forward in a direction of rotation of the impeller (60) and the inner edge (63a) of the blade (63) positioned rearward in the direction of rotation of the impeller (60).

2. The centrifugal fan of claim 1, wherein
the plurality of blades (63) include a first blade (63A), a second blade (63B) adjacent to the first blade (63A), and a third blade (63C) adjacent to the first blade (63A) on a side opposite to the second blade (63B),
the second blade (63B) is positioned rearward of the first blade (63A) in the direction of rotation,
the third blade (63C) is positioned forward of the first blade (63A) in the direction of rotation,
the pitch between the first blade (63A) and the third blade (63C) is shorter than the pitch between the first blade (63A) and the second blade (63B),
the first blade (63A) and the third blade (63C) have the flat surfaces (68) at portions corresponding to each other at the second surfaces (63s) of the outer portions (63r), and
an area of the flat surface (68) at the second surface (63s) of the outer portion (63r) of the third blade (63C) is larger than an area of the flat surface (68) at the second surface (63s) of the outer portion (63r) of the first blade (63A).

3. The centrifugal fan of claim 1 or 2, wherein
the plurality of blades (63) include a first blade (63A), a second blade (63B) adjacent to the first blade (63A), and a third blade (63C) adjacent to the first blade (63A) on a side opposite to the second blade (63B),
the second blade (63B) is positioned rearward of the first blade (63A) in the direction of rotation,
the third blade (63C) is positioned forward of the first blade (63A) in the direction of rotation,
the pitch between the first blade (63A) and the third blade (63C) is shorter than the pitch between the first blade (63A) and the second blade (63B),
the first blade (63A) and the second blade (63B) have the flat surfaces (68) at portions corresponding to each other at the first surfaces (63p) of the inner end portions (63i), and
an area of the flat surface (68) at the first surface (63p) of the inner end portion (63i) of the first blade (63A) is larger than an area of the flat surface (68) at the first surface (63p) of the inner end portion (63i) of the second blade (63B).

4. The centrifugal fan of any one of claims 1 to 3, wherein
the flat surface (68) is provided at the first surface (63p) of the inner end portion (63i) of the blade (63),
the plurality of blades (63) include a first blade (63A) and a second blade (63B) adjacent to each other,
in a cross section perpendicular to the axis (Ac) of the impeller (60), a line segment connecting the inner edge (63a) and the outer edge (63b) of the blade (63) is a chord line (Lc), and
a thickness of the inner end portion (63i) of the first blade (63A) in a direction orthogonal to the chord line (Lc) and a thickness of the inner end portion (63i) of the second blade (63B) in the direction orthogonal to the chord line (Lc) differ at portions corresponding to each other according to the presence or absence of the flat surface (68) or according to the area of the flat surface (68).

5. The centrifugal fan of claim 4, wherein
the plurality of blades (63) include a third blade (63C) adjacent to the first blade (63A) on a side opposite to the second blade (63B),
the second blade (63B) is positioned rearward of the first blade (63A) in the direction of rotation,
the third blade (63C) is positioned forward of the first blade (63A) in the direction of rotation,
the pitch between the first blade (63A) and the third blade (63C) is shorter than the pitch between the first blade (63A) and the second blade (63B), and
the thickness of the inner end portion (63i) of the first blade (63A) in the direction orthogonal to the chord line (Lc) is thinner than the thickness of the inner end portion (63i) of the second blade (63B) in the direction orthogonal to the chord line (Lc).

6. The centrifugal fan of any one of claims 1 to 5, wherein
the second surface (63s) forms a suction surface that receives a negative pressure during rotation of the impeller (60), and
the flat surface (68) is provided at the second surface (63s) of the outer portion (63r) of the blade (63).

7. The centrifugal fan of any one of claims 1 to 6, wherein
the first surface (63p) forms a pressure surface that receives a positive pressure during rotation of the impeller (60), and
the plurality of blades (63) are identical to each other in shape in 90% or more of the respective first surfaces (63p).

8. The centrifugal fan of any one of claims 1 to 7, wherein
the outer edge (63b) of the blade (63) is inclined with respect to the axis (Ac) so as to extend in a direction corresponding to a radially outward direction of the impeller (60) from the base plate (61) toward the shroud (62).

9. The centrifugal fan of any one of claims 1 to 8, wherein
the number of blades (63) is six or more.

10. A refrigeration apparatus comprising:
the centrifugal fan (50) of any one of claims 1 to 9.
